# EUROPEAN PATENT SPECIFICATION

(11) **EP 2 546 550 B1**
(45) Date of publication and mention of the grant of the patent: **26.03.2014**
(21) Application number: 12172603.8
(22) Date of filing: 19.06.2012
(51) Int. Cl.: F16H 57/00, F16H 3/10, F16D 3/68, F16H 57/02

(54) **Transmission apparatus and saddle type vehicle including the same**
Getriebevorrichtung und Sattelfahrzeug damit
Appareil de transmission et véhicule de type à enfourcher comprenant celui-ci

(30) Priority: 12.07.2011 JP 2011153564
(43) Date of publication of application: 16.01.2013
(73) Proprietor: Yamaha Hatsudoki Kabushiki Kaisha, Iwata-shi, Shizuoka-ken 438 (JP)
(72) Inventor: Murayama, Takuji, Shizuoka-ken, 438-8501 (JP); Hata, Shinichiro, Shizuoka-ken, 438-8501 (JP)
(74) Representative: Stöckeler, Ferdinand

(56) References cited:
- JP-A- 2009 068 700
- US-A- 5 214 975

## Description

### BACKGROUND OF THE INVENTION

### Field of the Invention

The present invention relates to a transmission apparatus and a saddle type vehicle including the same, and more specifically to a transmission apparatus for transmitting rotation via a plurality of rotating members and a saddle type vehicle including the same.

### Description of the Related Art

There have been proposals for transmission apparatuses for transmission of driving power from an engine to a driving wheel (rear wheel) via a plurality of gears.

For example, JP-A 2009-68700 discloses a stepwise automatic transmission apparatus, which has an input shaft, a plurality of intermediate shafts and an output shaft. The input shaft, the intermediate shafts and the output shaft are each provided with one or a plurality of gears. In a saddle type vehicle which is provided with this stepwise automatic transmission apparatus, the input shaft is rotated by driving power generated in the engine. The rotation of the input shaft is transmitted to the output shaft via a plurality of gears and a plurality of intermediate shafts, and then rotates the driving wheel (rear wheel).

Such a transmission apparatus, in which a gear mechanism transmits driving power, is subject to occasional vibration and machinery noise when changing speed, when starting the engine, etc. resulting from such a cause as backlash in the gear mechanism. This can be an annoyance to the rider.

US 5 214 975 A discloses a transmission apparatus having the features of the preamble of claim 1.

### SUMMARY OF THE INVENTION

Therefore, a primary object of the present invention is to provide a transmission apparatus capable of reducing the vibration and machinery noise, and to provide a saddle type vehicle including the transmission apparatus.

This object is achieved by a transmission apparatus according to Claim 1, and by a saddle type vehicle according to Claim 15.

According to the present invention, there is provided a transmission apparatus having an input shaft and an output shaft for transmission of rotation of the input shaft to the output shaft. The transmission apparatus includes a first intermediate shaft provided between the input shaft and the output shaft in a transmission route of the rotation from the input shaft to the output shaft; a first rotating member provided coaxially with the first intermediate shaft for integral rotation with the first intermediate shaft based on rotation transmitted from the input shaft; a second rotating member provided coaxially with the first intermediate shaft; a buffer member which connects the first rotating member with the second rotating member and reduces impact transmitted between the first rotating member and the second rotating member; and a transmission mechanism for transmission of rotation of the second rotating member to the output shaft. With this arrangement, the second rotating member rotates around the first intermediate shaft based on rotation transmitted from the first rotating member via the buffer member.

In the present invention, rotation of the input shaft is transmitted to the output shaft via the first rotating member, the buffer member, the second rotating member and the transmission mechanism. In this process, the buffer member reduces impact which is being transmitted between the first rotating member and the second rotating member while transmitting the rotation of the first rotating member to the second rotating member. Therefore, even if there is an impact generated in the rotation transmission route from the input shaft to the first rotating member, it is possible to prevent the impact by the buffer member, from being transmitted at the same magnitude to the second rotating member and the transmission mechanism. Thus, it is possible to eliminate occurrence of sizable impacts between the second rotating member and the output shaft (in the transmission mechanism), and therefore reduce vibration and machinery noise in the transmission apparatus.

Preferably, the buffer member includes an elastic member. In this case, the arrangement allows sufficient reduction of impact transmitted between the first rotating member and the second rotating member.

Further preferably, the elastic member contains rubber. In this case, the arrangement allows easy formation of the elastic member, and reliable reduction of impact transmitted between the first rotating member and the second rotating member.

Further, preferably, the first rotating member includes a disc-like first main body portion, and a first engagement portion and a second engagement portion provided at an interval in a circumferential direction of the first main body portion and extending from the first main body portion toward the second rotating member. With this arrangement, the elastic member has a first end portion on a side facing the first rotating member; the first engagement portion and the second engagement portion provide a first space therebetween, the first end portion of the elastic member is in the first space; and the first end portion is engagable by the first engagement portion or the second engagement portion for transmission of rotation of the first rotating member to the elastic member. In this case, transmission of rotation from the first rotating member to the buffer member is achieved by a simple configuration.

Preferably, the elastic member is so made that the first end portion of the elastic member is gapped from at least one of the first engagement portion and the second engagement portion and is slidable with respect to the first main body portion. In this case, energy of impact which is being transmitted between the first rotating member and the second rotating member is consumed by sliding movement of the elastic member' s first end portion with respect to the first rotating member's first main body portion. This sufficiently reduces impact transmitted from the first rotating member to the second rotating member and therefore, it is possible to sufficiently reduce occurrence of sizable impacts between the second rotating member and the output shaft. As a result, the arrangement provides sufficient reduction of vibration and machinery noise in the transmission apparatus.

Further preferably, the elastic member is so made that the first end portion of the elastic member makes contact with the first engagement portion and the second engagement portion. In this case, the arrangement reduces wear on the buffer member, leading to increased life of the buffer member.

Further, preferably, the second rotating member includes a disc-like second main body portion, and a third engagement portion and a fourth engagement portion provided at an interval in a circumferential direction of the second main body portion and extending from the second main body portion toward the first rotating member. With this arrangement, the elastic member has a second end portion on a side facing the second rotating member; the third engagement portion and the fourth engagement portion provide a second space therebetween; the second end portion of the elastic member is in the second space; and the second end portion is engagable by the third engagement portion or the fourth engagement portion for transmission of rotation of the elastic member to the second rotating member. In this case, transmission of rotation from the buffer member to the second rotating member can be achieved by a simple configuration.

Preferably, the elastic member is so made that the second end portion of the elastic member is gapped from at least one of the third engagement portion and the fourth engagement portion and is slidable with respect to the second main body portion. In this case, energy of impact which is being transmitted between the first rotating member and the second rotating member is consumed by sliding movement of the elastic member' s second end portion with respect to the second rotating member's second main body portion. This sufficiently reduces impact transmitted from the first rotating member to the second rotating member and therefore, it is possible to sufficiently reduce occurrence of sizable impacts between the second rotating member and the output shaft. As a result, the arrangement provides sufficient reduction of vibration and machinery noise in the transmission apparatus.

Further preferably, the elastic member is so made that the second end portion of the elastic member makes contact with the third engagement portion and the fourth engagement portion. In this case, the arrangement reduces wear on the buffer member, leading to increased life of the buffer member.

Further, preferably, the transmission apparatus further includes an urging member for urging at least one of the first rotating member and the second rotating member in a direction for bringing the first rotating member and the second rotating member closely to each other. In this transmission apparatus, when the first rotating member and the second rotating member are designed to make contact with each other for example, it is possible to contact the first rotating member and the second rotating member with each other under an appropriate pressure with the urging force from the urging member. In this case, energy of impact being transmitted between the first rotating member and the second rotating member can also be consumed at a region of contact between the first rotating member and the second rotating member. Thus, the arrangement allows sufficient reduction of impact transmitted between the first rotating member and the second rotating member. The arrangement also allows transmission of rotation of the first rotating member to the second rotating member via the above-described region of contact, resulting in efficient transmission of rotation of the first rotating member to the second rotating member. Also, in a case for example, where the buffer member is designed to be sandwiched by the first rotating member and the second rotating member, it is possible to appropriately contact the buffer member with the first rotating member and the second rotating member with the urging force from the urging member. As a result, it becomes possible to appropriately transmit rotation from the first rotating member to the second rotating member, and to appropriately reduce impact transmitted between the first rotating member and the second rotating member.

Preferably, the urging member includes a disc spring provided coaxially with the first intermediate shaft. In this case, the urging member can be provided easily by using the disc spring.

Further preferably, the transmission apparatus further includes a first clutch portion and a second clutch portion provided in the input shaft; a first transmitting portion for transmission of rotation which has been supplied from the input shaft to the first clutch portion, to the first intermediate shaft when the first clutch portion is in engagement and the second clutch portion is not in engagement; and a second transmitting portion for transmission of rotation which has been supplied from the input shaft to the second clutch portion, to the first rotating member when the second clutch portion is in engagement. With this arrangement, the second rotating member rotates based on rotation transmitted via the input shaft, the first clutch portion, the first transmitting portion, the first intermediate shaft, the first rotating member and the buffer member when the first clutch portion is in engagement and the second clutch portion is not. On the other hand, when the second clutch portion is in engagement, the second rotating member rotates based on rotation transmitted via the input shaft, the second clutch portion, the second transmitting portion, the first rotating member and the buffer member. In this transmission apparatus, rotation of the input shaft is transmitted to the second rotating member via the buffer member even when the first clutch portion is the only clutch portion engaged or even when the second clutch is in engagement. In other words, rotation of the input shaft is transmitted to the output shaft via the buffer member even when transmission route of rotation from the input shaft to the output shaft is different. Therefore, even when the transmission route of rotation from the input shaft to the output shaft has been changed, impact in the transmission route of rotation from the input shaft to the first rotating member is appropriately reduced by the buffer member. Thus, the arrangement ensures reliable reduction of vibration and machinery noise in the transmission apparatus.

Further, preferably, the transmission mechanism includes a second intermediate shaft which rotates based on rotation from the second rotating member; and a third clutch portion provided in the second intermediate shaft. Generally, in transmission apparatuses in which rotation speed of the input shaft is reduced in the process of transmission to the output shaft, torque on the upstream side is smaller than torque on the downstream side in the transmission route of rotation from the input shaft to the output shaft. Therefore, in an arrangement where the buffer member is disposed on an upstream side in the transmission route of rotation from the input shaft to the output shaft, the arrangement eliminates a case where the buffer member is subject to large forces. In this case, the arrangement makes it possible to ensure sufficient durability of the buffer member and to construct the buffer member compactly. Since the buffer member in this transmission apparatus is provided on a more upstream side than the second intermediate shaft where the third clutch portion is provided, the arrangement eliminates a case where the buffer member is subject to large forces. Therefore, the arrangement makes it possible to ensure sufficient durability of the buffer member and to construct the buffer member compactly. Thus, the transmission apparatus can be made compactly.

Preferably, the transmission mechanism includes a chain for transmission of rotation between the second rotating member and the output shaft. In this case, impact can be reduced by the chain. Thus, the arrangement ensures more reliable reduction of vibration and machinery noise in the transmission apparatus.

In a saddle type vehicle which includes a transmission apparatus, the transmission apparatus can be a source of vibration and machinery noise which can be an annoyance to the rider. Therefore, the above-described transmission apparatus which is capable of reducing vibration and machinery noise is applicable suitably to saddle type vehicles.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a scooter.
Fig. 2 is an illustrative sectional view showing an internal structure of an engine unit.
Fig. 3 is a schematic drawing which shows constituent elements of the engine unit.
Fig. 4 is an illustrative side view of the engine unit.
Fig. 5 is a sectional view of a rotation unit.
Fig. 6 is an exploded perspective view of the rotation unit.
Fig. 7 is an exploded perspective view of the rotation unit (taken from a different direction from the direction the view in Fig. 6 is taken).
Fig. 8 includes drawings for describing a positional relationship between a gear and a plurality of buffer members: Fig. 8 (a) is a side view of the gear; and Fig. 8 (b) is a side view of the gear and the buffer members.
Fig. 9 includes drawings for describing the buffer member: Fig. 9(a) is a side view of the buffer member; and Fig. 9(b) is a sectional view taken in lines X-X in Fig. 9(a).
Fig. 10 is a side view of a gear and buffer members.
Fig. 11 is an illustrative side view showing another example of the rotation unit.
Fig. 12 an illustrative side view showing still another example of the rotation unit.

### DETAILED DESCRIPTION OF THE PREFERRED EMBODIMENTS

Hereinafter, embodiments of the present invention will be described with reference to the drawings. The description will cover a case where a transmission apparatus 44 according to the embodiments of the present invention is installed in a scooter 10 as an example of saddle type vehicles. It is noted that the terms front and rear, right and left, up and down as used in the embodiments of the present invention are determined from the rider's position on a seat 40 of scooter 10, with the rider facing toward a handlebar 16.

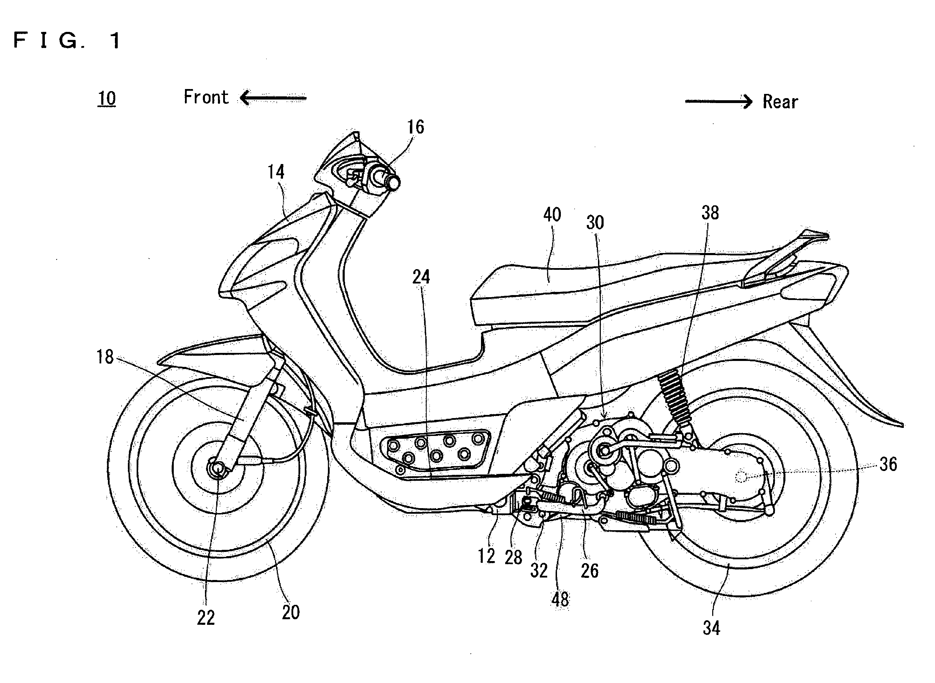

Fig. 1 is a side view of the scooter 10. Referring to Fig. 1, the scooter 10 includes a scooter frame 12 and a scooter cover 14 which covers the scooter frame 12. Although details of the scooter frame 12 are hidden behind the scooter cover 14 and not shown in Fig. 1, the scooter frame 12 has a front portion which extends obliquely in a forward and upward direction whereas a rear portion of the scooter frame 12 extends obliquely in a rearward and upward direction. The scooter frame 12 includes an unillustrated head pipe at a front end portion thereof. An unillustrated steering shaft is inserted rotatably into the head pipe. The steering shaft has an upper end portion provided with a handlebar 16. The steering shaft has a lower end portion, to which a front fork 18 is attached. The front fork 18 has a lower end portion which rotatably supports a front wheel 20 via a wheel shaft 22.

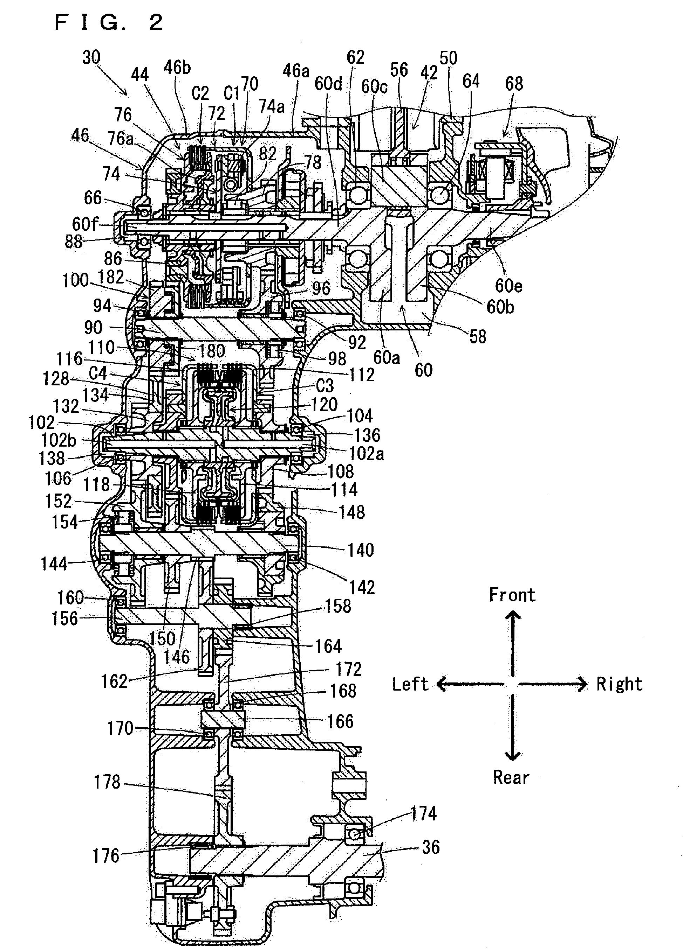

The scooter cover 14 has a lower end portion provided with a footstep 24 extending in the left and right directions for the rider to rest his/her feet. A side stand 26 is attached to the scooter frame 12, at a position behind the footstep 24 via a mounting portion 28. In the lower end portion of the scooter frame 12, an engine unit 30 is supported pivotably via a pivot shaft 32 at a position behind the mounting portion 28 and extends rearward. Specifically, the engine unit 30 has an engine bracket 48 to be described later, which is attached to the scooter frame 12 via the pivot shaft 32. As will be described later, the transmission apparatus 44 (see Fig. 2) is included in the engine unit 30.

The engine unit 30 has a rear end portion rotatably supporting a rear wheel 34 via an output shaft 36. A cushion unit 38 is provided, connecting a rear portion (not shown) of the scooter frame 12 with the engine unit 30. A seat 40 is provided at a rear portion (not shown) of the scooter frame 12, above the cushion unit 38 for the rider to sit on.

Hereinafter, the engine unit 30 will be described in detail.

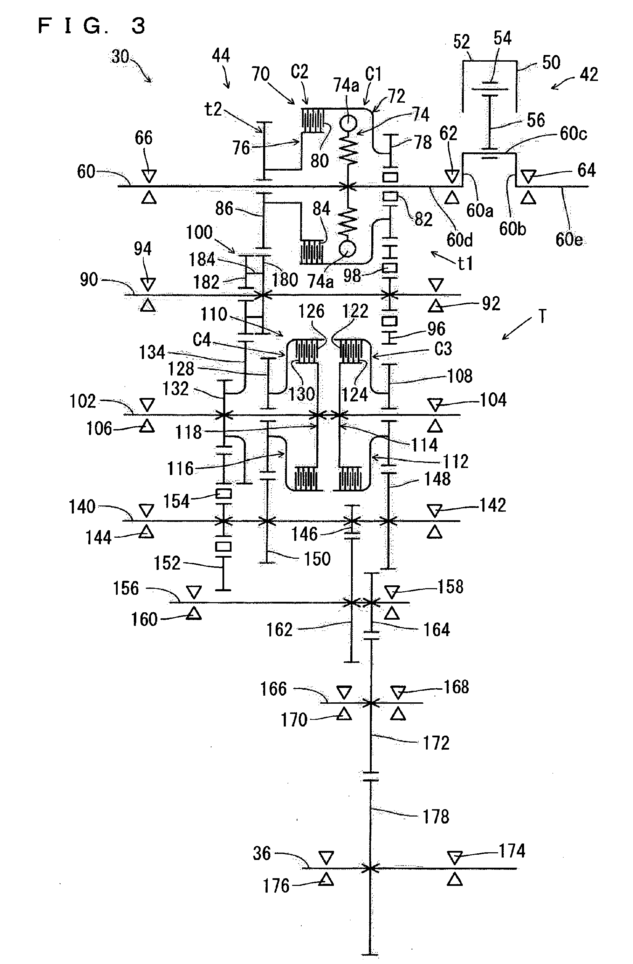

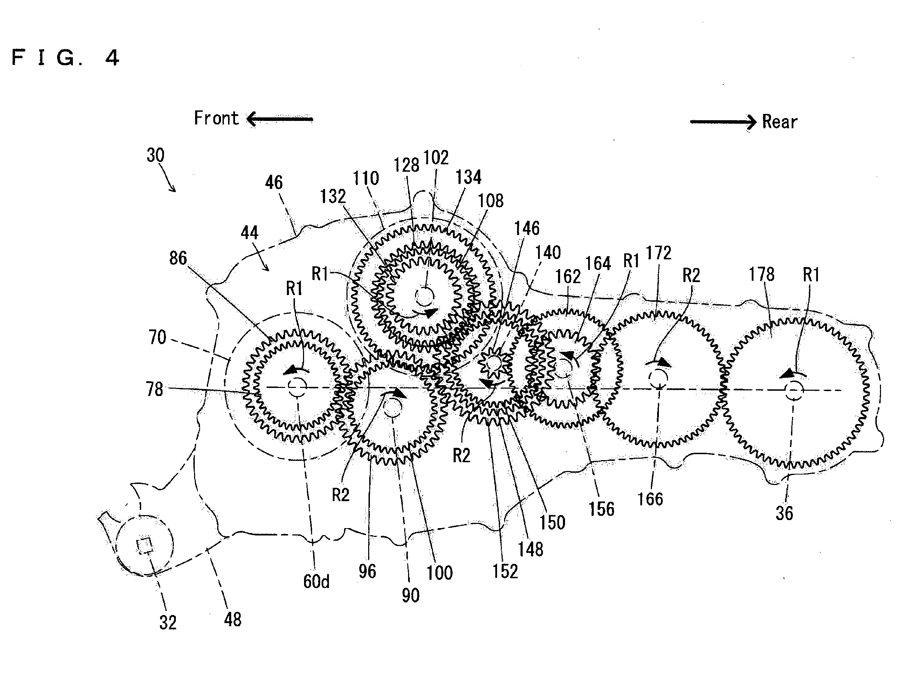

Fig. 2 is an illustrative sectional view showing an internal structure of the engine unit 30. Fig. 3 is a schematic diagram which shows constituent elements of the engine unit 30. Fig. 4 is an illustrative side view showing the engine unit 30.

Referring to Fig. 2 through Fig. 4, the engine unit 30 includes an engine 42 (see Fig. 2 and Fig. 3), the transmission apparatus 44, a casing 46 (see Fig. 2 and Fig. 4) and the engine bracket 48 (see Fig. 4).

Referring to Fig. 2, the casing 46 includes a casing main body 46a and a cover member 46b attached to a left end portion of the casing main body 46a. Referring to Fig. 2 and Fig. 3, the engine 42 has a cylinder body 50 (Fig. 2 shows only part thereof) which is connected with a front end portion of the casing main body 46a (see Fig. 2) and extends forward; a cylinder head 52 (see Fig. 3) provided at a front end portion of the cylinder body 50; a piston 54 (see Fig. 3) provided inside the cylinder body 50; and a connecting rod 56 (Fig. 2 shows only part thereof) which is connected with the piston 54. Referring to Fig. 2, a crank case 58 is formed behind the cylinder body 50 in the casing 46.

Referring to Fig. 2 and Fig. 3, the transmission apparatus 44 includes a crank shaft 60. The crank shaft 60 is provided at a front end space inside the casing 46 (see Fig. 2) . The crank shaft 60 has a pair of web portions 60a, 60b disposed in the crank case 58 (see Fig. 2) ; a crank pin 60c connecting the web portions 60a, 60b with each other; a crank journal 60d extending leftward from the web portion 60a; and a crank journal 60e extending rightward from the web portion 60b. The crank pin 60c is connected with a rear end portion of the connecting rod 56. In the present embodiment, the crank journal 60d represents the input shaft.

The crank shaft 60 is supported rotatably by the casing 46 (see Fig. 2) via a bearing 62 provided at a right end portion of the crank journal 60d; a bearing 64 provided at a left end portion of the crank journal 60e; and a bearing 66 provided at a left end portion of the crank journal 60d.

Referring to Fig. 4, the crank journal 60d (the crank shaft 60 (see Fig. 2)) makes rotation in a first direction R1 based on driving power generated by the engine 42 (see Fig. 2) . As the crank journal 60d (the crank shaft 60) rotates in the first direction R1, rotating shafts 102, 156 and the output shaft 36 to be described later rotate in the first direction R1 whereas rotating shafts 90, 140, 166 to be described later rotate in a second direction R2 (the opposite direction to the first direction R1) in the transmission apparatus 44.

Referring to Fig. 2, the crank journal 60e has its right end portion connected with a generator 68. The generator 68 generates electricity based on the rotation of the crank journal 60e.

The crank journal 60d has an oil passage 60f formed therein. The oil passage 60f opens at a left end surface of the crank journal 60d and an outer circumferential surface of the crank journal 60d.

Referring to Fig. 2 and Fig. 3, a first clutch unit 70 is provided coaxially with the crank journal 60d. The first clutch unit 70 includes a cylindrical clutch housing 72, an inner member 74 provided inside the clutch housing 72, and an inner member 76 provided on a more leftward side than the inner member 74.

A gear 78 is attached to a right end portion of the clutch housing 72 whereas on a left end portion of the clutch housing 72 a plurality of annular friction discs 80 (see Fig. 3) are attached. The clutch housing 72, the gear 78 and the friction discs 80 rotate integrally with each other.

The gear 78 is attached to the crank journal 60d via a one-way clutch 82. The one-way clutch 82 does not transmit rotations of the crank journal 60d in the first direction R1 (see Fig. 4), from the crank journal 60d to the gear 78 (the clutch housing 72) while it transmits rotations of the gear 78 (the clutch housing 72) in the first direction R1 (see Fig. 4), from the gear 78 to the crank journal 60d. Therefore, the one-way clutch 82 does not transmit the driving power generated by the engine 42 to the gear 78. It should be noted here that if the crank journal 60d and the gear 78 (the clutch housing 72) are both rotating in the first direction R1 (see Fig. 4) and the crank journal 60d is rotating faster than the gear 78 (the clutch housing 72), the one-way clutch 82 does not transmit rotation of the gear 78 (the clutch housing 72) in the first direction R1 (see Fig. 4) to the crank journal 60d. Since the one-way clutch 82 can be provided by a variety of known one-way clutches, the one-way clutch 82 will not be described in any more detail.

Referring to Fig. 2 and Fig. 3, the inner member 74 has a plurality of clutch shoes 74a. The inner member 74 is attached to the crank journal 60d so as to rotate integrally with the crank journal 60d. In the present embodiment, the clutch housing 72 and the inner member 74 function as a centrifugal, first clutch portion C1. In the first clutch portion C1, the plurality of clutch shoes 74a of the inner member 74 make contact with the clutch housing 72 when the rotation speed of the crank journal 60d reaches a predetermined speed. Thus, rotation of the crank journal 60d is transmitted to the clutch housing 72 via the inner member 74. As a result, the clutch housing 72 and the gear 78 rotate in the first direction R1 (see Fig. 4). Since the inner member 74 can be configured using a variety of known centrifugal clutch structures, configuration of the inner member 74 will not be described in any more detail.

Hereinafter, a state where the inner member 74 is in contact with the clutch housing 72 will be described as the first clutch portion C1 is in engagement, whereas a state where the inner member 74 is not in contact with the clutch housing 72 will be described as the first clutch portion C1 is not in engagement. It should be noted here that in the transmission apparatus 44, the first clutch portion C1 functions as a clutch for the 1st-speed gear position.

The inner member 76 is attached to the crank journal 60d via a collar, for example, rotatably with respect to the crank journal 60d. The inner member 76 has a presser 76a (see Fig. 2). Referring to Fig. 3, the inner member 76 has its outer circumferential portion provided with a plurality of annular clutch discs 84 whereas the inner member 76 has its left end portion provided with a gear 86. The inner member 76, the clutch discs 84 and the gear 86 rotate integrally with each other. The friction discs 80 and the clutch discs 84 are disposed alternately to each other.

In the present embodiment, the clutch housing 72, the inner member 76, the friction discs 80 (see Fig. 3), and the clutch discs 84 (see Fig. 3) function as a hydraulic, second clutch portion C2. In the second clutch portion C2, the inner member 76 is supplied with oil from an unillustrated oil source via an oil passage 88 (see Fig. 2) formed in the casing 46 (see Fig. 2) and the oil passage 60f (see Fig. 2) of the crank journal 60d, whereby the friction discs 80 (see Fig. 3) are pressed onto the clutch discs 84 (see Fig. 3) by the presser 76a (see Fig. 2). As a result, rotation of the clutch housing 72 is transmitted, via the friction discs 80 (see Fig. 3) and the clutch discs 84 (see Fig. 3), to the inner member 76, causing the inner member 76 and the gear 86 to rotate in the first direction R1 (see Fig. 4). When the oil supply to the inner member 76 is stopped, contact between the friction discs 80 (see Fig. 3) and the clutch discs 84 (see Fig. 3) is lost, and the transmission of rotation from the clutch housing 72 to the inner member 76 ceases. Since the inner member 76 can be configured using a variety of known hydraulic clutch structures, configuration of the inner member 76 will not be described in any more detail.

Hereinafter, a state where the friction discs 80 are in contact with the clutch discs 84 will be described as the second clutch portion C2 is in engagement, whereas a state where the friction discs 80 are not in contact with the clutch discs 84 will be described as the second clutch portion C2 is not in engagement. In the transmission apparatus 44, the second clutch portion C2 functions as a clutch for the 2nd-speed gear position.

Referring to Fig. 2 and Fig. 4, the rotating shaft 90 is parallel to the crank journal 60d at an obliquely rearward and downward position from the crank journal 60d in the casing 46. Referring to Fig. 2, the rotating shaft 90 has its right end portion rotatably supported by the casing 46 via a bearing 92 whereas the rotating shaft 90 has its left end portion rotatably supported by the casing 46 via a bearing 94. In the present embodiment, the rotating shaft 90 represents the first intermediate shaft.

Referring to Fig. 2 and Fig. 3, a gear 96 is provided coaxially with the rotating shaft 90 on a more leftward side than the bearing 92. The gear 96 is attached to the rotating shaft 90 via a one-way clutch 98. The gear 96 engages with the gear 78. The one-way clutch 98 does not transmit rotation of the rotating shaft 90 in the second direction R2 (see Fig. 4) from the rotating shaft 90 to the gear 96 while it transmits rotation of the gear 96 in the second direction R2 (see Fig. 4) from the gear 96 to the rotating shaft 90. When the rotating shaft 90 and the gear 96 are rotating in the second direction R2 (see Fig. 4) and the rotating shaft 90 is rotating faster than the gear 96, the one-way clutch 98 does not transmit rotation of the gear 96 in the second direction R2 (see Fig. 4) to the rotating shaft 90. In the present embodiment, the gear 78, the gear 96 and the one-way clutch 98 constitute the first transmitting portion t1 (see Fig. 3). The gear 86 functions as the second transmitting portion t2 (see Fig. 3).

A rotation unit 100 is provided coaxially with the rotating shaft 90 on a more rightward side than the bearing 94. The rotation unit 100 has a gear 180 to be described later, which is attached to the rotating shaft 90 for integrated rotation with the rotating shaft 90. The gear 180 in the rotation unit 100 engages with the gear 86. Thus, the rotation unit 100 is rotated as the rotating shaft 90 rotates or as the gear 86 transmits rotation to the gear 180. The rotation unit 100 will be described later in more detail.

In the transmission apparatus 44, if the first clutch portion C1 only is in engagement (if the gear position in the transmission apparatus 44 is for the 1st-speed), rotation of the crank journal 60d is transmitted to the gear 96 via the first clutch portion C1 and the gear 78. Thus, the gear 96 rotates in the second direction R2 (see Fig. 4). Since the one-way clutch 98 transmits rotation of the gear 96 in the second direction R2 (see Fig. 4) to the rotating shaft 90 as mentioned earlier, the rotation of the gear 96 in the second direction R2 (see Fig. 4) causes the rotating shaft 90 to rotate in the second direction R2 (see Fig. 4). Thus, the rotation unit 100 rotates in the second direction R2 (see Fig. 4).

On the other hand, if the first clutch portion C1 and the second clutch portion C2 are both in engagement (if the gear position in the transmission apparatus 44 is for the 2nd or a higher speed gear position), rotation of the crank journal 60d is transmitted to the gear 78 as well as to the gear 86 via the second clutch portion C2. Thus, the gear 86 rotates in the first direction R1 (see Fig. 4) at the same speed as the gear 78. Since the gear 180 in the rotation unit 100 is in engagement with the gear 86, rotation of the gear 86 in the first direction R1 (see Fig. 4) causes the rotation unit 100 and the rotating shaft 90 to rotate in the second direction R2 (see Fig. 4). In the transmission apparatus 44, a gear ratio (speed reduction ratio) between the gear 86 and the gear 180 is smaller than a gear ratio between the gear 78 and the gear 96. Therefore, when the gear 86 rotates the gear 180, the gear 180 and the rotating shaft 90 rotate faster than the gear 96. As described earlier, the one-way clutch 98 does not transmit rotation of the gear 96 in the second direction R2 (see Fig. 4) to the rotating shaft 90 if the rotating shaft 90 is rotating faster than the gear 96. Therefore, if both of the first clutch portion C1 and the second clutch portion C2 are in engagement (i.e. if the transmission apparatus 44 is set to the 2nd or a higher speed gear position), the gear 96 makes idle rotation.

Referring to Fig. 2 and Fig. 4, the rotating shaft 102 is parallel to the rotating shaft 90 at an obliquely rearward and upward position from the rotating shaft 90. Referring to Fig. 2, the rotating shaft 102 has its right end portion rotatably supported by the casing 46 via a bearing 104 whereas the rotating shaft 102 has its left end portion rotatably supported by the casing 46 via a bearing 106. In the present embodiment, the rotating shaft 102 represents the second intermediate shaft.

The rotating shaft 102 has oil passages 102a, 102b formed therein. The oil passage 102a opens in a right end surface of the rotating shaft 102 and in an outer circumferential surface of the rotating shaft 102. The oil passage 102b opens in a left end surface of the rotating shaft 102 and in an outer circumferential surface of the rotating shaft 102.

Referring to Fig. 2 and Fig. 3, a gear 108 is provided coaxially with the rotating shaft 102 on a more leftward side than the bearing 104. The gear 108 is attached to the rotating shaft 102 rotatably with respect to the rotating shaft 102 via a bushing or a collar for example.

A second clutch unit 110 is provided coaxially with the rotating shaft 102 on a more leftward side than the gear 108. The second clutch unit 110 includes a cylindrical clutch housing 112; an inner member 114 provided inside the clutch housing 112; a cylindrical clutch housing 116 provided on a more leftward side than the clutch housing 112; an inner member 118 provided inside the clutch housing 116; and a presser 120 (see Fig. 2) provided between the inner member 114 and the inner member 118.

The gear 108 is attached to a right end portion of the clutch housing 112. At a left end portion of the clutch housing 112, a plurality of annular friction discs 122 (see Fig. 3) are attached. The gear 108, the clutch housing 112 and the friction discs 122 (see Fig. 3) rotate integrally with each other.

The inner member 114 is attached to the rotating shaft 102 so as to rotate integrally with the rotating shaft 102. Referring to Fig. 3, a plurality of annular clutch discs 124 are attached to an outer circumferential portion of the inner member 114. The friction discs 122 and the clutch discs 124 are disposed alternately to each other.

Referring to Fig. 2 and Fig. 3, the clutch housing 116 has its right end portion provided with a plurality of annular friction discs 126 (see Fig. 3). The clutch housing 116 has its left end portion provided with a gear 128. The gear 128 is attached to the rotating shaft 102 rotatably with respect to the rotating shaft 102 via a bushing or a collar for example. The clutch housing 116, the clutch discs 126 (see Fig. 3) and the gear 128 rotate integrally with each other.

The inner member 118 is attached to the rotating shaft 102 so as to rotate integrally with the rotating shaft 102. Referring to Fig. 3, a plurality of annular clutch discs 130 are attached to an outer circumferential portion of the inner member 118. The friction discs 126 and the clutch discs 130 are disposed alternately to each other.

Referring to Fig. 2 and Fig. 3, a gear 132 is provided coaxially with the rotating shaft 102 on the left side of the gear 128. The gear 132 is attached to the rotating shaft 102 so as to rotate integrally with the rotating shaft 102. The gear 132 has its right end portion, where a gear 134 is attached to rotate integrally with the gear 132. The gear 134 engages with a gear 182, to be described later, of the rotation unit 100. Thus, the gear 134 rotates in the first direction R1 (see Fig. 4) based on rotation transmitted from the gear 182 of the rotation unit 100. Therefore, the gear 132 and the rotating shaft 102 rotate in the first direction R1 (see Fig. 4).

In the present embodiment, the clutch housing 112, the inner member 114, the presser 120 (see Fig. 2), the friction discs 122 (see Fig. 3) and the clutch discs 124 (see Fig. 3) function as a hydraulic, third clutch portion C3. The clutch housing 116, the inner member 118, the presser 120 (see Fig. 2), the friction discs 126 (see Fig. 3) and the clutch discs 130 (see Fig. 3) function as a hydraulic, fourth clutch portion C4.

In the third clutch portion C3, the presser 120 (see Fig. 2) is supplied with oil from an unillustrated oil source via an oil passage 136 (see Fig. 2) formed in the casing 46 and the oil passage 102a (see Fig. 2) of the rotating shaft 102. Thus, as will be understood from Fig. 3, the friction discs 122 are pressed onto the clutch discs 124 by the presser 120 (see Fig. 2) . As a result, rotation of the rotating shaft 102 in the first direction R1 (see Fig. 4) is transmitted to the clutch housing 112 via the inner member 114, the clutch discs 124 and the friction discs 122 to cause the clutch housing 112 and the gear 108 to rotate in the first direction R1 (see Fig. 4). When the oil supply from the oil passage 102a (see Fig. 2) to the presser 120 (see Fig. 2) is stopped, the friction discs 122 and the clutch discs 124 are disengaged from each other, and so the transmission of rotation from the inner member 114 to the clutch housing 112 ceases.

In the fourth clutch portion C4, oil is supplied from an unillustrated oil source to the presser 120 (see Fig. 2) via an oil passage 138 (see Fig. 2) formed in the casing 46 (see Fig. 2) and the oil passage 102b (see Fig. 2) of the rotating shaft 102. Thus, as will be understood from Fig. 3, the friction discs 126 are pressed onto the clutch discs 130 by the presser 120 (see Fig. 2). As a result, rotation of the rotating shaft 102 in the first direction R1 (see Fig. 4) is transmitted to the clutch housing 116 via the inner member 118, the clutch discs 130 and the friction discs 126 to cause the clutch housing 116 and the gear 128 to rotate in the first direction R1 (see Fig. 4). When the oil supply from the oil passage 102b (see Fig. 2) to the presser 120 (see Fig. 2) is stopped, the friction discs 126 and the clutch discs 130 are disengaged from each other, and so the transmission of rotation from the inner member 118 to the clutch housing 116 ceases.

The inner member 114, the inner member 118 and the presser 120 can be configured using a variety of known hydraulic clutch structures, so no more details of the inner member 114, the inner member 118 or the presser 120 will be given herein.

Hereinafter, a state where the friction discs 122 are in contact with the clutch discs 124 will be described as the third clutch portion C3 is in engagement, whereas a state where the friction discs 122 are not in contact with the clutch discs 124 will be described as the third clutch portion C3 is not in engagement. Likewise, a state where the friction discs 126 are in contact with the clutch discs 130 will be described as the fourth clutch portion C4 is in engagement, whereas a state where the friction discs 126 are not in contact with the clutch discs 130 will be described as the fourth clutch portion C4 is not in engagement. In the transmission apparatus 44, the third clutch portion C3 functions as a clutch for the 3rd-speed gear position whereas the fourth clutch portion C4 functions as a clutch for the 4th-speed gear position.

Referring to Fig. 2 and Fig. 4, in the casing 46, the rotating shaft 140 is parallel to the rotating shaft 102 at an obliquely rearward and downward position from the rotating shaft 102. Referring to Fig. 2, the rotating shaft 140 has its right end portion rotatably supported by the casing 46 via a bearing 142 whereas the rotating shaft 140 has its left end portion rotatably supported by the casing 46 via a bearing 144.

Referring to Fig. 2 and Fig. 3, gear teeth 146 are provided around an outer circumferential surface of the rotating shaft 140 at its substantially center portion in terms of the left-right direction. A gear 148 is provided coaxially with the rotating shaft 140 between the bearing 142 and the gear teeth 146. The gear 148 is attached to the rotating shaft 140 so as to rotate integrally with the rotating shaft 140. The gear 148 engages with the gear 108. Thus, as will be understood from Fig. 3, rotation of the rotating shaft 102 in the first direction R1 (see Fig. 4) is transmitted to the gear 148 via the third clutch portion C3 and the gear 108 if the third clutch portion C3 is in engagement. Thus, the gear 148 and the rotating shaft 140 rotate in the second direction R2 (see Fig. 4).

Referring to Fig. 2 and Fig. 3, a gear 150 is provided coaxially with the rotating shaft 140 on a more leftward side than the gear teeth 146. The gear 150 is attached to the rotating shaft 140 so as to rotate integrally with the rotating shaft 140. The gear 150 engages with the gear 128. Thus, as will be understood from Fig. 3, rotation of the rotating shaft 102 in the first direction R1 (see Fig. 4) is transmitted to the gear 150 via the fourth clutch portion C4 and the gear 128 if the fourth clutch portion C4 is in engagement. Thus, the gear 150 and the rotating shaft 140 rotate in the second direction R2 (see Fig. 4) . In the transmission apparatus 44, the fourth clutch portion C4 does not make engagement if the third clutch portion C3 is in engagement. Also, the third clutch portion C3 does not make engagement if the fourth clutch portion C4 is in engagement.

Referring to Fig. 2 and Fig. 3, a gear 152 is provided coaxially with the rotating shaft 140 between the gear 150 and the bearing 144. The gear 152 engages with the gear 132. The gear 152 is attached to the rotating shaft 140 via a one-way clutch 154. The one-way clutch 154 does not transmit rotation of the rotating shaft 140 in the second direction R2 (see Fig. 4) from the rotating shaft 140 to the gear 152 but transmits rotation of the gear 152 in the second direction R2 (see Fig. 4) from the gear 152 to the rotating shaft 140. When the rotating shaft 140 and the gear 152 are rotating in the second direction R2 (see Fig. 4) and the rotating shaft 140 is rotating faster than the gear 152, the one-way clutch 154 does not transmit rotation of the gear 152 in the second direction R2 (see Fig. 4) to the rotating shaft 140.

In the transmission apparatus 44, if neither the third clutch portion C3 nor the fourth clutch portion C4 is in engagement (if the gear position is set to the 1st-speed or the 2nd-speed gear position), rotation of the rotation unit 100 in the second direction R2 (see Fig. 4) is transmitted to the gear 152 via the gear 134 and the gear 132. Thus, the gear 152 rotates in the second direction R2 (see Fig. 4). Since the one-way clutch 154 transmits rotation of the gear 152 in the second direction R2 (see Fig. 4) to the rotating shaft 140 as mentioned earlier, the rotation of the gear 152 in the second direction R2 (see Fig. 4) causes the rotating shaft 140 to rotate in the second direction R2 (see Fig. 4).

If the third clutch portion C3 is in engagement and the fourth clutch portion C4 is not (if the gear position is set to the 3rd-speed gear position), rotation of the rotation unit 100 is transmitted to the gear 152 via the gear 134 and the gear 132, and to the gear 148 as well via the gear 134, the gear 132, the rotating shaft 102, the third clutch portion C3 and the gear 108. Thus, the gear 148 and the rotating shaft 140 rotate in the second direction R2 (see Fig. 4). In the transmission apparatus 44, a gear ratio (speed reduction ratio) between the gear 108 and the gear 148 is smaller than a gear ratio between the gear 132 and the gear 152. Therefore, the gear 148 and the rotating shaft 140 rotate faster than the gear 152. As described earlier, the one-way clutch 154 does not transmit rotation of the gear 152 in the second direction R2 (see Fig. 4) to the rotating shaft 140 if the rotating shaft 140 is rotating faster than the gear 152. Therefore, the gear 152 makes idle rotation if the transmission apparatus 44 is set to the 3rd-speed gear position.

If the fourth clutch portion C4 is in engagement and the third clutch portion C3 is not (if the gear position is set to the 4th-speed gear position), rotation of the rotation unit 100 is transmitted to the gear 152 via the gear 134 and the gear 132, and to the gear 150 as well via the gear 134, the gear 132, the rotating shaft 102, the fourth clutch portion C4 and the gear 128. Thus, the gear 150 and the rotating shaft 140 rotate in the second direction R2 (see Fig. 4) . In the transmission apparatus 44, a gear ratio (speed reduction ratio) between the gear 128 and the gear 150 is smaller than a gear ratio between the gear 132 and the gear 152. Therefore, the gear 150 and the rotating shaft 140 rotate faster than the gear 152. As described earlier, the one-way clutch 154 does not transmit rotation of the gear 152 in the second direction R2 (see Fig. 4) to the rotating shaft 140 if the rotating shaft 140 is rotating faster than the gear 152. Therefore, the gear 152 makes idle rotation if the transmission apparatus 44 is set to the 4th-speed gear position. A gear ratio (speed reduction ratio) between the gear 128 and the gear 150 is smaller than a gear ratio between the gear 108 and the gear 148. Therefore, when the fourth clutch portion C4 is in engagement, the rotating shaft 140 rotates faster than when the third clutch portion C3 is in engagement.

Referring to Fig. 2 and Fig. 4, in the casing 46, the rotating shaft 156 is parallel to the rotating shaft 140 at a more rearward position than the rotating shaft 140. Referring to Fig. 2, the rotating shaft 156 has its right end portion rotatably supported by the casing 46 via a bearing 158 whereas the rotating shaft 156 has its left end portion rotatably supported by the casing 46 via a bearing 160.

Referring to Fig. 2 and Fig. 3, a gear 162 and a gear 164 are provided coaxially with the rotating shaft 156 between the bearing 158 and the bearing 160. The gear 162 and the gear 164 are attached to the rotating shaft 156 so as to rotate integrally with the rotating shaft 156. The gear 162 engages with the gear teeth 146 of the rotating shaft 140. Therefore, rotation of the rotating shaft 140 is transmitted to the gear 162 via the gear teeth 146. Thus, the gear 162, the rotating shaft 156 and the gear 164 rotate in the first direction R1 (see Fig. 4).

Referring to Fig. 2 and Fig. 4, in the casing 46, the rotating shaft 166 is parallel to the rotating shaft 156 at a more rearward position than the rotating shaft 156. Referring to Fig. 2, the rotating shaft 166 has its right end portion rotatably supported by the casing 46 via a bearing 168 whereas the rotating shaft 166 has its left end portion rotatably supported by the casing 46 via a bearing 170.

Referring to Fig. 2 and Fig. 3, a gear 172 is provided coaxially with the rotating shaft 166 between the bearing 168 and the bearing 170. The gear 172 is attached to the rotating shaft 166 so as to rotate integrally with the rotating shaft 166. The gear 172 engages with the gear 164. Therefore, rotation of the rotating shaft 156 is transmitted to the gear 172 via the gear 164. Thus, the gear 172 and the rotating shaft 166 rotate in the second direction R2 (see Fig. 4).

Referring to Fig. 2 and Fig. 4, the output shaft 36 is parallel to the rotating shaft 166 at a more rearward position than the rotating shaft 166. Referring to Fig. 2, the output shaft 36 is rotatably supported by the casing 46 via a bearing 174 and a bearing 176. The output shaft 36 protrudes rightward from the casing 46. Inside the casing 46, a gear 178 is provided coaxially with the output shaft 36. The gear 178 is attached to the output shaft 36 so as to rotate integrally with the rotating shaft 36. The output shaft 36 has a right end portion (not illustrated), where the rear wheel 34 (see Fig. 1) is attached to rotate integrally with the output shaft 36. The gear 178 engages with the gear 172. Therefore, rotation of the gear 172 is transmitted to the output shaft 36 via the gear 178. Thus, the output shaft 36 and the rear wheel 34 (see Fig. 1) rotate in the first direction R1 (see Fig. 4) . As a result, the scooter 10 (see Fig. 1) moves forward.

Referring to Fig. 3, in the present embodiment, the rotating shafts 102, 140, 156 and 166; the gears 108, 128, 132, 134, 148, 150, 152, 162, 164, 172, and 178; the one-way clutch 154; the third clutch portion C3 and the fourth clutch portion C4 constitute a transmission mechanism T.

Next, a transmission route of rotation from the crank journal 60d to the output shaft 36 in the transmission apparatus 44 will be described briefly with reference to Fig. 3.

First, as the crank journal 60d (the crank shaft 60) has attained a certain predetermined speed of rotation, the first clutch portion C1 becomes engaged to set the transmission apparatus 44 to the 1st-speed gear position. In this situation, there is no engagement in the second clutch portion C2, the third clutch portion C3 or the fourth clutch portion C4. Therefore, rotation of the crank journal 60d is transmitted to the output shaft 36 via the first clutch portion C1, the first transmitting portion t1 (the gear 78, the gear 96 and the one-way clutch 98), the rotating shaft 90, the rotation unit 100, and the transmission mechanism T (the gear 134, the gear 132, the gear 152, the one-way clutch 154, the rotating shaft 140, the gear teeth 146, the gear 162, the rotating shaft 156, the gear 164, the gear 172 and the gear 178 in the 1st-speed gear position).

Next, the second clutch portion C2 is engaged, whereby the transmission apparatus 44 is set to the 2nd-speed gear position. In this situation, the first clutch portion C1 is in engagement but the third clutch portion C3 and the fourth clutch portion C4 are not in engagement. Therefore, rotation of the crank journal 60d is transmitted to the output shaft 36 via the first clutch portion C1, the second clutch portion C2, the second transmitting portion t2 (the gear 86), the rotation unit 100, and the transmission mechanism T (the gear 134, the gear 132, the gear 152, the one-way clutch 154, the rotating shaft 140, the gear teeth 146, the gear 162, the rotating shaft 156, the gear 164, the gear 172 and the gear 178 in the 2nd-speed gear position).

Next, the third clutch portion C3 is engaged, whereby the transmission apparatus 44 is set to the 3rd-speed gear position. In this situation, the first clutch portion C1 and the second clutch portion C2 are in engagement but the fourth clutch portion C4 is not. Therefore, rotation of the crank journal 60d is transmitted to the output shaft 36 via the first clutch portion C1, the second clutch portion C2, the second transmitting portion t2 (the gear 86), the rotation unit 100, and the transmission mechanism T (the gear 134, the gear 132, the rotating shaft 102, the third clutch portion C3, the gear 108, the gear 148, the rotating shaft 140, the gear teeth 146, the gear 162, the rotating shaft 156, the gear 164, the gear 172 and the gear 178 in the 3rd-speed gear position).

Next, the fourth clutch portion C4 is engaged, whereby the transmission apparatus 44 is set to the 4th-speed gear position. In this situation, the first clutch portion C1 and the second clutch portion C2 are in engagement but the third clutch portion C3 is not. Therefore, rotation of the crank journal 60d is transmitted to the output shaft 36 via the first clutch portion C1, the second clutch portion C2, the second transmitting portion t2 (the gear 86), the rotation unit 100, and the transmission mechanism T (the gear 134, the gear 132, the rotating shaft 102, the fourth clutch portion C4, the gear 128, the gear 150, the rotating shaft 140, the gear teeth 146, the gear 162, the rotating shaft 156, the gear 164, the gear 172 and the gear 178 in the 4th-speed gear position).

As described thus far, in the present embodiment, rotation of the crank journal 60d is transmitted to the output shaft 36 via the rotation unit 100 regardless of the gear position in the transmission apparatus 44. Hereinafter, configuration of the rotation unit 100 will be described in detail.

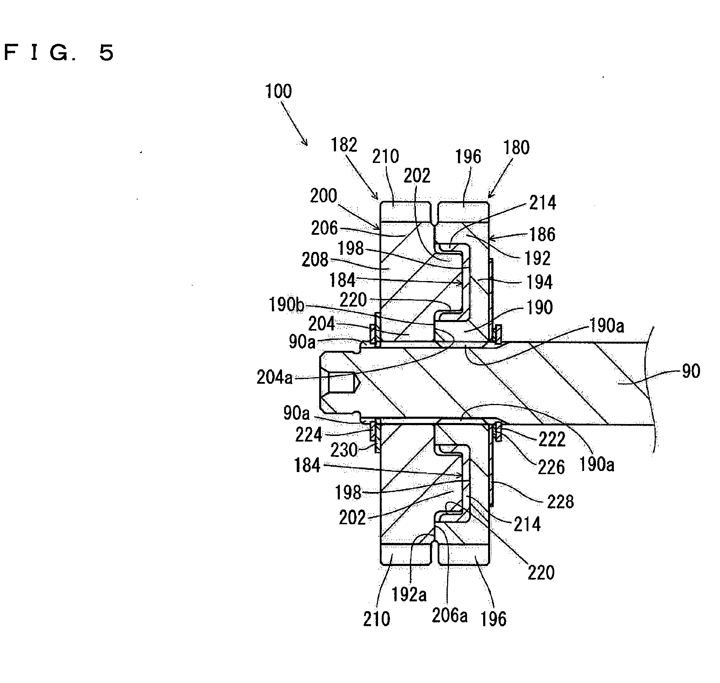

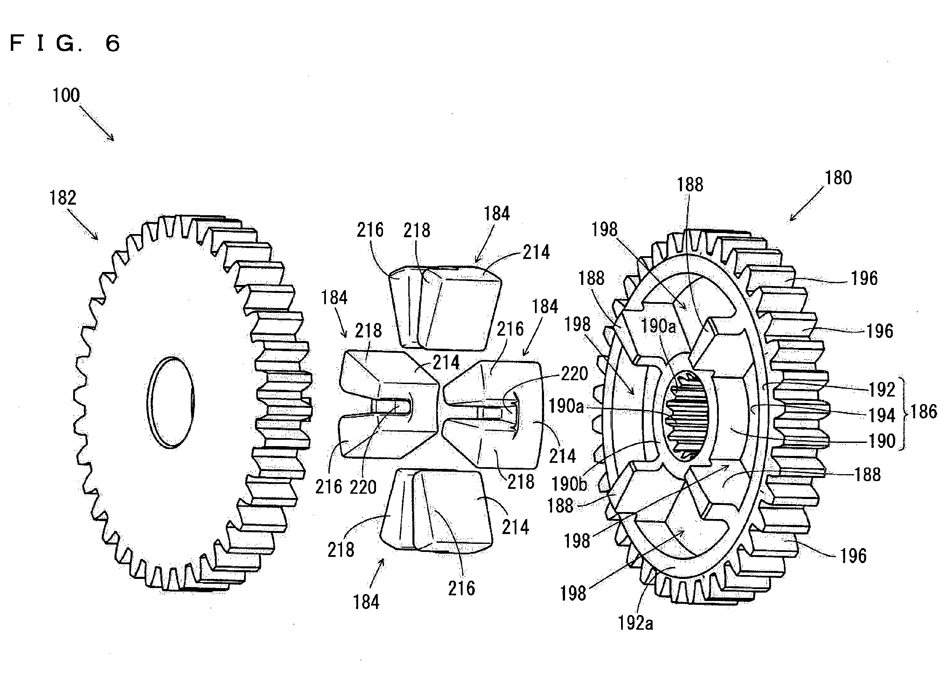

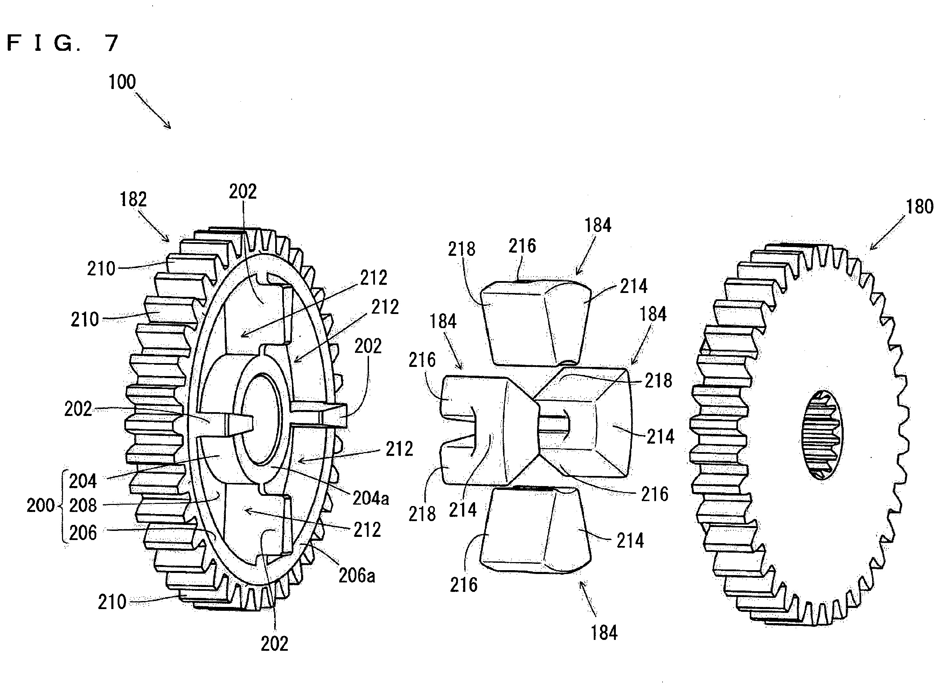

Fig. 5 is a sectional view of the rotation unit 100. Fig. 6 and Fig. 7 are exploded perspective view of the rotation unit 100.

Referring to Fig. 5 through Fig. 7, the rotation unit 100 has a gear 180, a gear 182, and a plurality (four in the present embodiment) of buffer members 184 which connect the gear 180 and the gear 182 with each other. The gear 180 and the gear 182 are coaxially opposed to each other. In the present embodiment, the gear 180 represents the first rotating member whereas the gear 182 represents the second rotating member.

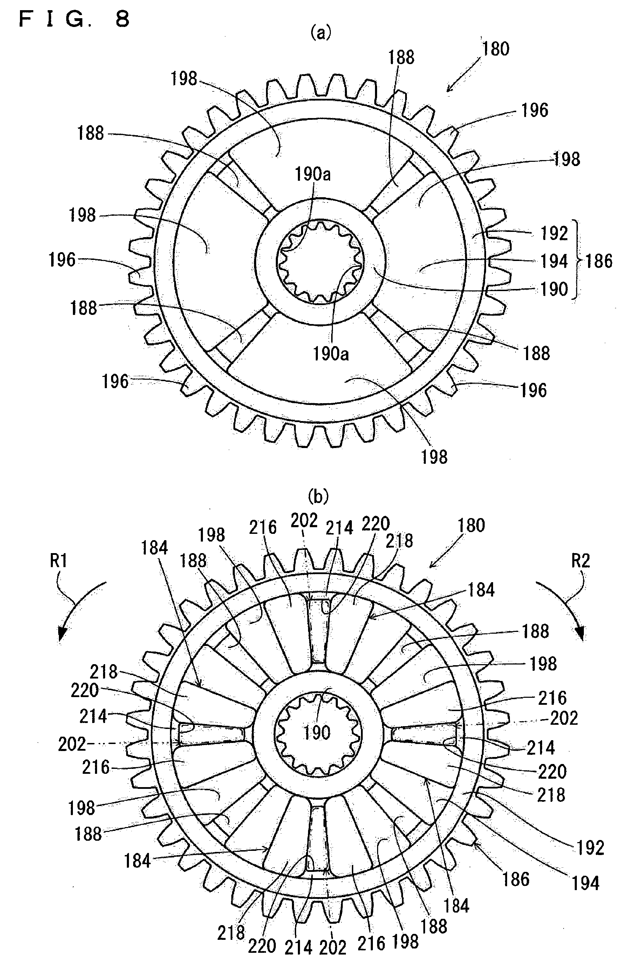

Fig. 8 (a) is a side view of the gear 180 (viewed from the side closer to the gear 182), whereas Fig. 8(b) is a side view showing a relationship between the gear 180 and the buffer members 184 (viewed from the side closer to the gear 182).

Referring to Fig. 5, Fig. 6 and Fig. 8(a), the gear 180 includes a hollow and substantially disc-like main body portion 186, and a plurality (four in the present embodiment) of engagement portions 188 (see Fig. 6 and Fig. 8(a)) provided at an interval in a circumferential direction of the main body portion 186 and extending in parallel to an axial direction of the main body 186. In the present embodiment, the main body portion 186 represents the first main body portion.

The main body portion 186 includes a cylindrical portion 190 which is cylindrical and is provided at the center; a cylindrical portion 192 which is cylindrical, has a greater diameter than the cylinder portion 190 and is coaxial with the cylinder portion 190; and an annular portion 194 connecting an end (a right end in the present embodiment) of the cylindrical portion 190 with an end (a right end in the present embodiment) of the cylindrical portion 192. In other words, the annular portion 194 connects an end of the cylindrical portion 190 which is not facing the gear 182 (the end facing away from the gear 182) with an end of the cylindrical portion 192 which is not facing the gear 182 (the end facing away from the gear 182).

Referring to Fig. 5, an end portion (a left end portion in the present invention) of the rotating shaft 90 has its outer circumferential surface formed with a plurality of grooves 90a extending in parallel to the axial direction of the rotating shaft 90. Referring to Fig. 5, Fig. 6 and Fig. 8(a), the cylindrical portion 190 has its inner circumferential surface formed with a plurality of grooves 190a extending in parallel to the axial direction of the cylindrical portion 190 correspondingly to the grooves 90a (see Fig. 5). Referring to Fig. 5, the rotating shaft 90 has the above-described end portion inserted into the cylindrical portion 190 so that the grooves 90a are engaged with the grooves 190a. Specifically, in the present embodiment, the rotating shaft 90 is a spline shaft whereas the cylindrical portion 190 is a spline receptacle. Thus, the gear 180 is fixed to the rotating shaft 90 in the rotating direction of the rotating shaft 90, so the rotating shaft 90 and the gear 180 rotate integrally with each other.

Referring to Fig. 5, Fig. 6 and Fig. 8 (a), the cylindrical portion 192 has a plurality of gear teeth 196 on its outer circumference. The gear 180 engages with the gear 86 (see Fig. 2 and Fig. 3) via the gear teeth 196. Thus, rotation of the gear 86 is transmitted to the gear 180.

Referring to Fig. 6, each engagement portion 188 extends from the annular portion 194 of the main body portion 186 toward the gear 182 and connects the cylindrical portion 190 with the cylindrical portion 192. Therefore, as understood from Fig. 6 and Fig. 8(a), the cylindrical portion 190, the cylindrical portion 192 and the annular portion 194 form an annular space, which is partitioned by a plurality (four in the present embodiment) of the engagement portions 188, into a plurality (four in the present embodiment) of fan-shaped spaces 198. In other words, the plurality of spaces 198 are partitioned and defined by the cylindrical portion 190, the cylindrical portion 192, the annular portion 194 and the engagement portions 188. In the present embodiment, one of the mutually adjacent two engagement portions 188 represents the first engagement portion whereas the other represents the second engagement portion, with each space 198 representing the first space.

Referring to Fig. 5 and Fig. 7, the gear 182 includes a hollow and substantially disc-like main body portion 200, and a plurality (four in the present embodiment) of engagement portions 202 provided at an interval in a circumferential direction of the main body portion 200 and extending in parallel to the axial direction of the main body portion 200.

Referring to Fig. 7, the main body portion 200 includes a cylindrical portion 204 which is cylindrical and is provided at the center; a cylindrical portion 206 which is cylindrical, has a greater diameter than the cylinder portion 204 and is coaxial with the cylindrical portion 204; and an annular portion 208 connecting an end (a left end in the present embodiment) of the cylindrical portion 204 with an end (a left end in the present embodiment) of the cylindrical portion 206. In other words, the annular portion 208 connects an end of the cylindrical portion 204 which is not facing the gear 180 (the end facing away from the gear 180) with an end of the cylindrical portion 206 which is not facing the gear 180 (the end facing away from the gear 180).

Referring to Fig. 5, the rotating shaft 90 has its one end portion (the left end portion in the present embodiment) inserted into the cylindrical portion 204. The outer circumferential surface of the rotating shaft 90 is not directly fixed to the inner circumferential surface of the cylindrical portion 204. Therefore, rotation of the rotating shaft 90 is not transmitted directly to the gear 182. In the present embodiment, no parts are provided between the rotating shaft 90 and the cylindrical portion 204. However, for example, a collar or a bushing which is rotatable with respect to at least one of the rotating shaft 90 and the cylindrical portion 204 may be provided between the rotating shaft 90 and the cylindrical portion 204.

Referring to Fig. 7, the cylindrical portion 206 has a plurality of gear teeth 210 on its outer circumference. The gear 182 engages with the gear 134 (see Fig. 2 see Fig. 3) via the gear teeth 210. Therefore, rotation of the rotating shaft 100 is transmitted to the gear 134 via the gear 182.

Each engagement portion 202 extends from the annular portion 208 of the main body portion 200 toward the gear 180, and also connects the cylindrical portion 204 with the cylindrical portion 206. Therefore, the cylindrical portion 204, the cylindrical portion 206 and the annular portion 208 form an annular space, which is partitioned by a plurality (four in the present embodiment) of the engagement portions 202, into a plurality (four in the present embodiment) of fan-shaped spaces 212. In other words, the plurality of spaces 212 are partitioned and defined by the cylindrical portion 204, the cylindrical portion 206, the annular portion 208 and the engagement portions 202.

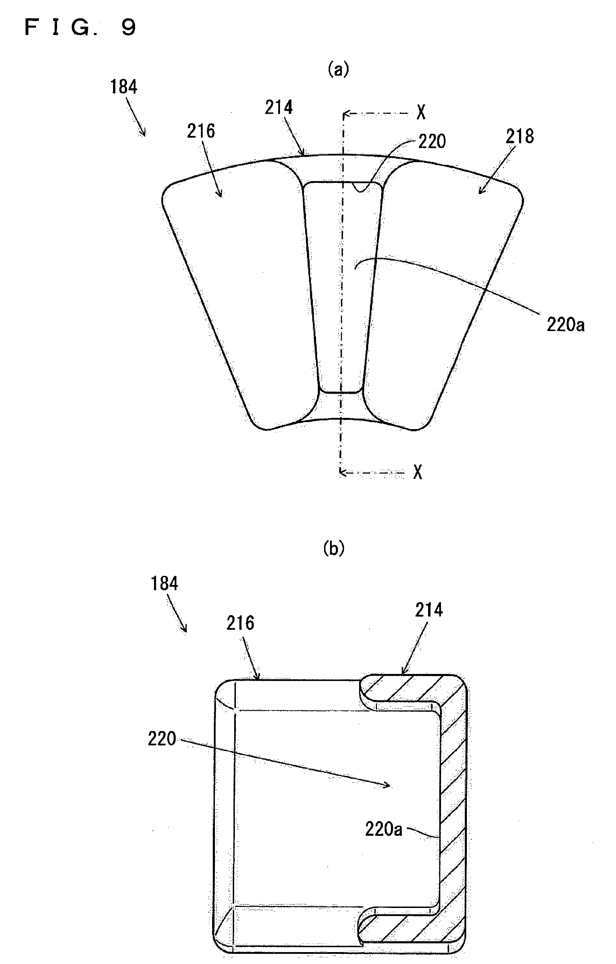

Fig. 9(a) is a side view of the buffer member 184 (viewed from the side closer to the gear 182), whereas Fig. 9(b) is a sectional view taken in lines X-X in Fig. 9(a).

The buffer member 184 includes an elastic member for example. In the present embodiment, the buffer member 184 is made of rubber (for example, NBR (nitrile rubber) or HNBR (hydrogenated nitrile rubber)). The buffer member 184 is fan-shaped in a side view (when viewed from a side closer to the gear 180 or to the gear 182).

Referring to Fig. 6, Fig. 7 and Fig. 9, the buffer member 184 includes a base portion 214 and protrusions 216, 218. Referring to Fig. 6 and Fig. 9, the base portion 214 has a recess 220 in its center portion. Referring to Fig. 9, the protrusions 216, 218 are spaced from each other in a side view (when viewed from a side closer to the gear 182), with the recess 220 in between. In other words, the recess 220 is between the protrusion 216 and the protrusion 218 in a side view (when viewed from a side closer to the gear 182). Also, the protrusions 216, 218 extend vertically with respect to a bottom surface 220a of the recess 220. Referring to Fig. 6 and Fig. 7, in the present embodiment, the base portion 214 is on the side closer to the gear 180, and the protrusions 216, 218 protrude from the base portion 214 toward the gear 182. In the present embodiment, the base portion 214 represents the first end portion.

Referring to Fig. 5 and Fig. 8 (b), each buffer member 184 is disposed in one of the spaces 198 so that the base portion 214 makes contact with the cylindrical portion 190, the cylindrical portion 192 and the annular portion 194. The buffer member 184 has a dimension in a circumferential direction of the gear 180 (the main body portion 186), which is smaller than a dimension of the space 198 in the circumferential direction of the gear 180 (the main body portion 186). Therefore, as will be understood from Fig. 8(b), with the base portion 214 disposed in the space 198, a gap is left between the base portion 214 and at least one of the two engagement portions 188 on either sides (on the first direction R1 side and the second direction R2 side) of the base portion 214. Under a state shown in Fig. 8(b), the base portion 214 is disposed in the space 198 so that a gap is left on each side of the base portion 214, i.e., a gap from one engagement portion 188 and the other gap from the other engagement portion 188.

In the present embodiment, the base portion 214 of the buffer member 184 is slidable with respect to the cylindrical portion 190, the cylindrical portion 192 and the annular portion 194 of the main body portion 186. Therefore, the base portion 214 can slide along the main body portion 186 circumferentially of the gear 180 (the main body portion 186) within the space 198.

Referring to Fig. 5, Fig. 7 and Fig. 8(b), each engagement portion 202 of the gear 182 (see Fig. 5 and Fig. 7) is inserted into one of the recesses 220 of the buffer members 184 (see Fig. 5 and Fig. 8(b)). Thus, each of the buffer members 184 is attached to one of the engagement portions 202.

Referring to Fig. 5, a circlip 222 is attached to the rotating shaft 90, at a more rightward position than the rotation unit 100 whereas a circlip 224 is attached to the rotating shaft 90, at a more leftward position than the rotation unit 100. Between the circlip 222 and the rotation unit 100, a washer 226 and an annular urging member 228 are provided coaxially with the rotating shaft 90. In the present embodiment, the urging member 228 is provided by a disc spring. Between the circlip 224 and the rotation unit 100, a washer 230 is provided coaxially with the rotating shaft 90. The urging member 228 urges the gear 180 toward the gear 182. Consequently, as will be understood from Fig. 5 through Fig. 7, contact is established between an end surface 190b of the cylindrical portion 190 facing the gear 182 and an end surface 204a of the cylindrical portion 204 facing the gear 180; as well as between an end surface 192a of the cylindrical portion 192 facing the gear 182 and an end surface 206a of the cylindrical portion 206 facing the gear 180.

Hereinafter, functions and advantages of the transmission apparatus 44 will be described in detail.

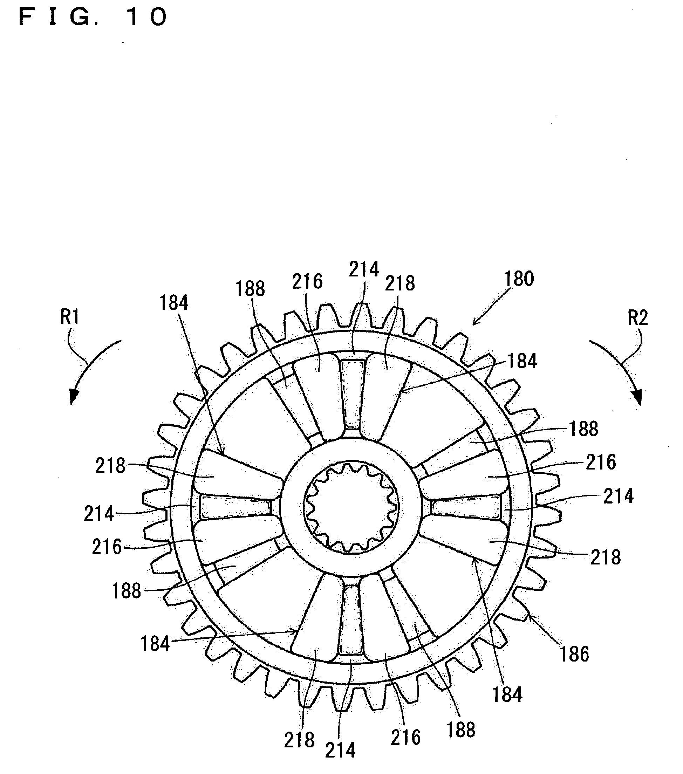

Fig. 10 is a side view (taken from the side closer to the gear 182) showing a state of the gear 180 and the buffer members 184 when the gear 180 makes rotation based on rotation transmitted from the crank journal 60d (see Fig. 3).

As has been described earlier, the gear 180 in the rotation unit 100 rotates in the second direction R2 (see Fig. 4) based on rotation transmitted from the crank journal 60d. Referring to Fig. 8 (b) and Fig. 10, as the gear 180 rotates in the second direction R2, each buffer member 184 makes relative movement in the first direction R1 with respect to the main body portion 186 by sliding on the main body portion 186 of the gear 180. Then, as shown in Fig. 10, each buffer member 184 is engaged by the engagement portion 188 located in the first direction R1 as viewed from the buffer member 184. As a result, rotation of the gear 180 is transmitted to the plurality of buffer members 184 via the plurality of engagement portions 188. Since the buffer members 184 are caught by the engagement portions 202 (see Fig. 7) of the gear 182 (see Fig. 7), the rotation from the gear 180 to the buffer members 184 is then transmitted to the gear 182 via the engagement portions 202. Thus, the gear 182 rotates around the rotating shaft 90. As has been mentioned, rotation of the gear 182 is transmitted to the output shaft 36 via the transmission mechanism T.

In this process, each buffer member 184 reduces impact transmitted between the gear 180 and the gear 182 while transmitting the rotation of the gear 180 to the gear 182. Therefore, even if there is an impact generated in the rotation transmission route from the crank journal 60d to the gear 180, it is possible to prevent the impact by the buffer members 184, from being transmitted at the same magnitude to the gear 182 and the transmission mechanism T. Thus, it is possible to eliminate occurrence of sizable impacts between the gear 182 and the output shaft 36 (in the transmission mechanism T), and therefore reduce vibration and machinery noise in the transmission apparatus 44.

Also, as will be understood from Fig. 6, in the rotation unit 100, each buffer member 184 has the base portion 214 (an end portion of the buffer member 184 facing the gear 180) which makes sliding movement with respect to the main body portion 186 (cylindrical portion 190, cylindrical portion 192 and annular portion 194) of the gear 180, consuming energy of impact during its transmission between the gear 180 and the gear 182. This sufficiently reduces the impact transmitted from the gear 180 to the gear 182, and therefore, it is possible to sufficiently reduce occurrence of sizable impacts between the gear 182 and the output shaft 36. As a result, the arrangement is capable of sufficiently reduce vibration and machinery noise in the transmission apparatus 44.

Also, as the base portions 214 of the buffer members 184 slide with respect to the main body portion 186 (cylindrical portion 190, cylindrical portion 192 and annular portion 194) of the gear 180, friction is generated and rotation of the gear 180 is transmitted to the gear 182 via the buffer member 184. This leads to smooth starting of rotation transmission from the gear 180 to the gear 182.

Also, referring to Fig. 5, the gear 180 is urged by the urging member 228 toward the gear 182. This ensures contact between end surfaces 190b, 192a of the gear 180 and respective end surfaces 204a, 206a of the gear 182 under an appropriate pressure. In this case, it is also possible to consume energy of impact which is being transmitted between the gear 180 and the gear 182, by the region of contact between the end surface 190b and the end surface 204a, and by the region of contact between the end surface 192a and the end surface 206a as well. This helps appropriate reduction of the impact transmitted between the gear 180 and the gear 182. This also helps transmission of rotation of the gear 180 to the gear 182 via the above-described regions of contact, resulting in efficient transmission of rotation from the gear 180 to the gear 182. Further, by urging the gear 180 toward the gear 182, the arrangement ensures appropriate contact of the buffer member 184, which is sandwiched by the gear 180 and the gear 182, with the gear 180 and the gear 182. This ensures appropriate transmission of rotation from the gear 180 to the gear 182 with appropriate reduction of impact which is transmitted between the gear 180 and the gear 182. Still further, by urging the gear 180 toward the gear 182, the arrangement makes sure that the base portions 214 of the buffer members 184 are pressed onto the main body portion 186 of the gear 180 under an appropriate pressure. This makes sure that energy of impact transmitted between the gear 180 and the gear 182 is sufficiently consumed when the base portions 214 of the buffer members 184 slide with respect to the main body portion 186. However, the buffer members 184 need not be actively pressed to the main body portion 186 of the gear 180 if it is more desirable to reduce wear of the buffer member 184 and thereby increase life of the buffer members 184. Specifically, for example, size of the buffer members 184 or urging force of the urging member 228 may be adjusted so that the buffer members 184 will not be pressed too strongly to the main body portion 186 of the gear 180.

As described with reference to Fig. 3, in the transmission apparatus 44, rotation of the crank journal 60d is transmitted to the output shaft 36 via the rotation unit 100 (the buffer members 184) regardless of the gear position. Therefore, even when the transmission route of rotation from the crank journal 60d to the output shaft 36 is changed, impact in the transmission route of rotation from the crank journal 60d to the rotation unit 100 (the gear 180) is appropriately reduced by the buffer members 184. Thus, the arrangement ensures reliable reduction of vibration and machinery noise in the transmission apparatus 44.

In the transmission apparatus 44, the rotation unit 100 is disposed on a more upstream side than the rotating shaft 102 which is provided with the third clutch portion C3 and the fourth clutch portion C4, in the transmission route of rotation from the crank journal 60d to the output shaft 36. Since the transmission apparatus 44 involves speed reduction process in the transmission of rotation from the crank journal 60d to the output shaft 36, torque on the upstream side is smaller than torque on the downstream side in the transmission route of rotation from the crank journal 60d to the output shaft 36. Therefore, if the rotation unit 100 is disposed on an upstream side in the transmission route of rotation from the crank journal 60d to the output shaft 36, the arrangement eliminates a case where the buffer members 184 are subject to large forces. Thus, in the transmission apparatus 44, the rotation unit 100 is disposed on a more upstream side than the rotating shaft 102, thereby eliminating a case where the buffer members 184 are subject to large forces. The arrangement makes it possible to ensure sufficient durability of the buffer members 184 and to construct the buffer members 184 compactly. As a result, it is possible to make the transmission apparatus 44 in a compact size.

In the rotation unit 100 described so far, a plurality of buffer members 184 are attached to a plurality of engagement portions 202 in the gear 182. However, the buffer members 184 may be attached to the respective engagement portions 188 of the gear 180, instead of the engagement portions 202. In this case, each engagement portion 188 of the gear 180 is inserted between the protrusions 216, 218 of the buffer member 184 and into the recess 220 of the buffer member 184. Also, the base portion 214 of the buffer member 184 is disposed in the space 212 so that it can make contact with the main body portion 200 (cylindrical portion 204, cylindrical portion 206 and annular portion 208) of the gear 182 and can make sliding action with respect to the main body portion 200. It should be noted here that a dimension of the buffer member 184 in a circumferential direction of the gear 182 (main body portion 200) is smaller than a dimension of the space 212 in the circumferential direction. Therefore, as the base portion 214 is disposed in the space 212, a gap is left between the base portion 214 and at least one of the two engagement portions 202 on either sides (on the first direction R1 side and on the second direction R2 side) of the base portion 214. In the rotation unit having such a configuration as the above, a plurality of buffer members 184 rotate integrally with the gear 180 as the gear 180 rotates. More specifically, the buffer members 184 make rotation relative to the gear 182 while making sliding movement with respect to the main body portion 200 of the gear 182. Then, the buffer members 184 are caught by the engagement portions 202, and rotation of the gear 180 is transmitted to the gear 182 via the buffer members 184. In the present embodiment, the main body portion 200 represents the second main body portion; one of any mutually adjacent two engagement portions 202 represents the third engagement portion whereas the other represents the fourth engagement portion; each space 212 represents the second space; and the base portion 214 represents the second end portion.

In the embodiment described above, the buffer members 184 are formed so that the base portions 214 can slide with respect to the main body portion 186 of the gear 180 (or main body portion 200 of the gear 182) . However, the buffer members are not limited to this example.

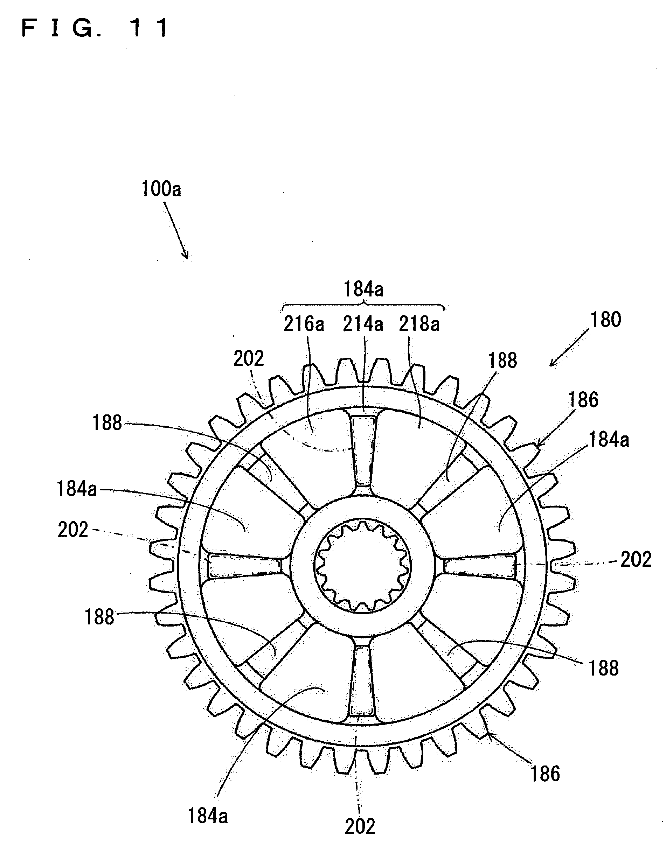

Fig. 11 is an illustrative side view showing another example of the rotation unit. Fig. 11 shows a rotation unit 100a, which differs from the rotation unit 100 described above in that it has buffer members 184a of a different shape. The rotation unit 100a without the buffer members 184a is the same as the rotation unit 100 without the buffer members 184. Therefore, no more details will be described here for the rotation unit 100a other than about the buffer members 184a. It should be noted here that in order to avoid complication in the drawing, Fig. 11 does not show the main body portion 200 (see Fig. 7) of the gear 182 (see Fig. 7), but shows a plurality of engagement portions 202 only.

The buffer member 184a in Fig. 11 differs from the buffer member 184 in the following aspects: Specifically, in the circumferential direction of the gear 180 (the main body portion 186), a base portion 214a, a protrusion 216a and a protrusion 218a of the buffer member 184a each have a greater dimension than the corresponding base portion 214, protrusion 216 and protrusion 218 of the buffer member 184 (see Fig. 8 (b)). More specifically, the buffer member 184a is given a greater dimension in the above-mentioned circumferential direction than that of the space 198 (see Fig. 8(a)) in the same circumferential direction in order to allow the base portion 214a to make contact with the two engagement portions 188 on either sides of the buffer member 184a.

In the rotation unit 100a, the base portion 214a makes contact with the two engagement portions 188. The arrangement reduces sliding movement of the base portion 214a with respect to the main body portion 186 of the gear 180. In this case, the arrangement reduces wear on the buffer member 184a, leading to increased life of the buffer member 184a. In the present embodiment, the base portion 214a represents the first end portion.

It should be noted here that the buffer members 184a may be attached to the respective engagement portions 188 of the gear 180, instead of attaching to the engagement portions 202. In this case, each buffer member 184a has its base portion 214a located in the space 212 so as to make contact with the two mutually adjacent engagement portions 202 (see Fig. 7) of the gear 182 (see Fig. 7). In the present embodiment, the main body portion 200 represents the second main body portion; one of any mutually adjacent two engagement portions 202 represents the third engagement portion whereas the other represents the fourth engagement portion; each space 212 represents the second space; and the base portion 214a represents the second end portion.

In the embodiment described above, a plurality of the buffer members 184 (or the buffer members 184a) are attached to either the engagement portions 188 in the gear 180 or the engagement portions 202 in the gear 182. However, the buffer members may be attached to both of the engagement portions 188 and the engagement portions 202.

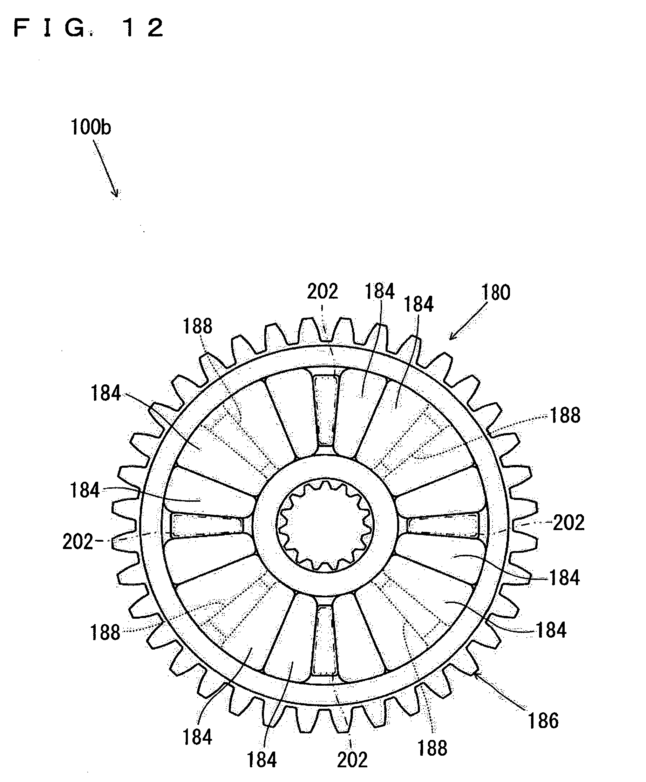

Fig. 12 is an illustrative side view showing an example of a rotation unit in which the buffer members 184 are attached to both of the engagement portions 188 and the engagement portions 202. Fig. 12 shows a rotation unit 100b, which differs from the rotation unit 100 described so far, in that not only a plurality (four in the present embodiment) of the buffer members 184 are attached to a plurality (four in the present embodiment) of the engagement portions 202 but further, another plurality (four in the present embodiment) of the buffer members 184 are attached to a plurality (four in the present embodiment) of the engagement portions 188. Except this aspect, i.e., that the buffer member 184 is attached to each engagement portion 188, the rotation unit 100b has the same configuration as the rotation unit 100. It should be noted here that in order to avoid complication in the drawing, Fig. 12 does not show the main body portion 200 (see Fig. 7) of the gear 182 (see Fig. 7), but shows a plurality of engagement portions 202 only.

Referring to Fig. 12, in the rotation unit 100b, the buffer members 184 attached to the engagement portions 188 of the gear 180 make contact with the buffer members 184 attached to the engagement portions 202 of the gear 182. In this case, the arrangement reduces sliding movement of the base portion 214 in each buffer member 184 with respect to the main body portion 186 of the gear 180 (or the main body portion 200 of the gear 182). As a result of these, the arrangement reduces wear on the buffer members 184, leading to increased life of the buffer members 184.

In the rotation unit 100b shown in Fig. 12, contact is made between the buffer members 184 attached to the engagement portions 188 and the buffer members 184 attached to the engagement portions 202. However, the buffer members may be made so that space is left between the buffer members attached to the engagement portions 188 and the buffer members attached to the engagement portions 202.

In the embodiment described above, the buffer members 184, 184a are made of rubber. However, the buffer members are not limited to this case. For example, buffer members may include spring members such as coil springs and leaf springs.

In the embodiment described above, the urging member 228 is provided on the right side of the rotation unit 100. However, the urging member 228 may be provided on the left side of the rotation unit 100. In this case, it is possible to urge the gear 182 toward the gear 180 by the urging member 228.

In the embodiment described above, the urging member 228 is provided by a disc spring. However, the urging member is not limited to this example. Specifically, the urging member should be able to urge at least one of the gear 180 and the gear 182 in a direction for bringing one of the gear 180 and the gear 182 closer to the other. For example, the urging member may be provided by a coil spring. In this case, the gears 180 and 182 may be connected with each other by the coil spring so that the gear 180 and the gear 182 are urged to come closer to each other, for example.

In the gear 180 (see Fig. 8) described so far, a plurality of engagement portions 188 divides a space between the cylindrical portion 190 and the cylindrical portion 192 into a plurality of spaces 198. However, the engagement portion is not limited to this configuration. Specifically, the engagement portion should be able to capture the buffer member in the direction of gear rotation (rotation of the first rotating member). It is not necessary that the spaces 198 are partitioned completely by the engagement portions. For example, the engagement portion may be formed with a cutout so that a space 198 and another space 198 adjacent thereto are continuous with each other in a side view. Likewise, the engagement portion may be formed with a cutout to connect one space 212 with another space 212.

In the embodiment described above, the transmission mechanism T achieves transmission of rotation by a plurality of gears. However, the transmission mechanism is not limited to this configuration. The transmission mechanism may include a chain as means for transmitting rotation. For example, a chain may be provided to connect the rotating shaft 140 with the output shaft 36, so that rotation of the rotating shaft 140 is transmitted to the output shaft 36 by the chain. In this case, impact is reduced by the chain, so it becomes possible to reduce vibration and machinery noise more reliably in the transmission apparatus.

In the embodiment described above, the first clutch portion is provided by the first clutch portion C1 which is a centrifugal clutch. However, the first clutch portion may be provided by a hydraulic clutch. In this case, the transmission apparatus may have such a configuration that the 2nd-speed gear position is attained by engaging each of the first clutch portion and the second clutch portion, or such a configuration that the 2nd-speed gear position is attained by engaging the second clutch portion without engaging the first clutch portion.

In the embodiment described above, the 2nd-speed, the 3rd-speed and the 4th-speed clutches are provided hydraulically, by the clutch portion C2, the clutch portion C3 and the clutch portion C4 respectively. However, any or all of the 2nd-speed, the 3rd-speed and the 4th-speed clutches may be provided by centrifugal clutches.

In the embodiment described above, description was made for the transmission apparatus 44 which has four speed gear positions. However, the present invention is applicable also to a transmission apparatus which has two speed gear positions, three speed gear positions or five or a greater number of gear positions.

Also, the saddle type vehicle to which the present invention is applicable is not limited to the scooter 10. Specifically, the present invention is applicable to other kinds of saddle type vehicles including other types of motorcycles such as mopeds; all-terrain vehicles; snowmobiles; and others.

The present invention being thus far described in terms of preferred embodiments, it is obvious that these may be varied in many ways within the scope of the present invention. The scope of the present invention is only limited by the accompanied claims.

### LEGEND

- 10: Scooter
- 30: Engine unit
- 36: Output shaft
- 42: Engine
- 44: Transmission apparatus
- 46: Casing
- 60: Crank shaft
- 60d: Crank journal
- 90, 102, 140, 156, 166: Rotation shafts
- 100, 100a, 100b: Rotation units
- 180, 182: Gears
- 184, 184a: Buffer members
- 186, 200: Main body portions
- 188, 202: Engagement portions
- 198, 212: Spaces
- 214, 214a: Base portions
- 216, 216a, 218, 218a: Protrusions
- 228: Urging member
- C1: First clutch portion
- C2: Second clutch portion
- C3: Third clutch portion
- C4: Fourth clutch portion
- T: Transmission mechanism
- t1: First transmitting portion
- t2: Second transmitting portion

## Claims

1. A transmission apparatus (44) having an input shaft (60d) and an output shaft (36) for transmission of rotation of the input shaft (60d) to the output shaft (36), comprising:
a first intermediate shaft (90) provided between the input shaft (60d) and the output shaft (36) in a transmission route of the rotation from the input shaft (60d) to the output shaft (36);
a first rotating member (180) provided coaxially with the first intermediate shaft (90) for integral rotation with the first intermediate shaft (90) based on rotation transmitted from the input shaft (60d);
a second rotating member (182) provided coaxially with the first intermediate shaft (90);
a buffer member (184, 184a) which connects the first rotating member (180) with the second rotating member (182) and is adapted to reduce impact transmitted between the first rotating member (180) and the second rotating member (182); and **characterized in** further having
a transmission mechanism (T) for transmission of rotation of the second rotating member (182) to the output shaft (36);
wherein the second rotating member (182) rotates around the first intermediate shaft (90) based on rotation transmitted from the first rotating member (180) via the buffer member (184, 184a).

2. The transmission apparatus (44) according to Claim 1, wherein the buffer member includes an elastic member (184, 184a).

3. The transmission apparatus (44) according to Claim 2, wherein the elastic member (184, 184a) contains rubber.

4. The transmission apparatus (44) according to Claim 2 or 3, wherein
the first rotating member (180) includes a disc-like first main body portion (186), and a first engagement portion (188) and a second engagement portion (188) provided at an interval in a circumferential direction of the first main body portion (186) and extending from the first main body portion (186) toward the second rotating member (182);
the elastic member (184, 184a) has a first end portion (214, 214a) on a side facing the first rotating member (180);
the first engagement portion (188) and the second engagement portion (188) provide a first space (198) therebetween;
the first end portion (214, 214a) of the elastic member (184, 184a) is in the first space (198); and
the first end portion (214, 214a) is engagable by the first engagement portion (188) and/or the second engagement portion (188) for transmission of rotation of the first rotating member (180) to the elastic member (184, 184a).

5. The transmission apparatus (44) according to Claim 4, wherein the elastic member (184) is so made that the first end portion (214) of the elastic member (184) is gapped from at least one of the first engagement portion (188) and the second engagement portion (188) and is slidable with respect to the first main body portion (186).

6. The transmission apparatus (44) according to Claim 4, wherein the elastic member (184a) is so made that the first end portion (214a) of the elastic member (184a) makes contact with the first engagement portion (188) and the second engagement portion (188).

7. The transmission apparatus (44) according to Claim 4, wherein
the second rotating member (182) includes a disc-like second main body portion (200), and a third engagement portion (202) and a fourth engagement portion (202) provided at an interval in a circumferential direction of the second main body portion (200) and extending from the second main body portion (200) toward the first rotating member (180);
the elastic member (184, 184a) has a second end portion (214, 214a) on a side facing the second rotating member (182) ;
the third engagement portion (202) and the fourth engagement portion (202) provide a second space (212) therebetween;
the second end portion (214, 214a) of the elastic member (184, 184a) is in the second space (212); and
the second end portion (214, 214a) is engagable by the third engagement portion (202) and/or the fourth engagement portion (202) for transmission of rotation of the elastic member (184, 184a) to the second rotating member (182).

8. The transmission apparatus (44) according to Claim 7, wherein the elastic member (184) is so made that the second end portion (214) of the elastic member (184) is gapped from at least one of the third engagement portion (202) and the fourth engagement portion (202) and is slidable with respect to the second main body portion (200).

9. The transmission apparatus (44) according to Claim 7, wherein the elastic member (184a) is so made that the second end portion (214a) of the elastic member (184a) makes contact with the third engagement portion (202) and the fourth engagement portion (202).

10. The transmission apparatus (44) according to one of Claims 1 through 9, further comprising an urging member (228) for urging at least one of the first rotating member (180) and the second rotating member (182) in a direction for bringing the first rotating member (180) and the second rotating member (182) closely to each other.

11. The transmission apparatus (44) according to Claim 10, wherein the urging member (228) includes a disc spring provided coaxially with the first intermediate shaft (90).

12. The transmission apparatus (44) according to one of Claims 1 through 11, further comprising:
a first clutch portion (C1) and a second clutch portion (C2) provided in the input shaft (60d);
a first transmitting portion (t1) for transmission of rotation which has been supplied from the input shaft (60d) to the first clutch portion (C1), to the first intermediate shaft (90) when the first clutch portion (C1) is in engagement and the second clutch portion (C2) is not in engagement; and
a second transmitting portion (t2) for transmission of rotation which has been supplied from the input shaft (60d) to the second clutch portion (C2), to the first rotating member (180) when the second clutch portion (C2) is in engagement;
wherein the second rotating member (182) rotates based on rotation transmitted via the input shaft (60d), the first clutch portion (C1), the first transmitting portion (t1), the first intermediate shaft (90), the first rotating member (180) and the buffer member (184, 184a) when the first clutch portion (C1) is in engagement and the second clutch portion (C2) is not; and
wherein the second rotating member (182) rotates based on rotation transmitted via the input shaft (60d), the second clutch portion (C2), the second transmitting portion (t2), the first rotating member (180) and the buffer member (184, 184a) when the second clutch portion (C2) is in engagement.

13. The transmission apparatus (44) according to one of Claims 1 through 12, wherein the transmission mechanism (T) includes a second intermediate shaft (102) which rotates based on rotation from the second rotating member (182); and
a third clutch portion (C3) provided in the second intermediate shaft (102).

14. The transmission apparatus (44) according to one of Claims 1 through 13, wherein the transmission mechanism (T) includes a chain for transmission of rotation between the second rotating member (182) and the output shaft (36).

15. A saddle type vehicle (10) comprising the transmission apparatus (44) according to one of Claims 1 through 14.

## Patentansprüche

1. Eine Übertragungsvorrichtung (44) mit einer Eingangswelle (60d) und einer Ausgangswelle (36) für eine Übertragung einer Drehung der Eingangswelle (60d) zu der Ausgangswelle (36), die folgende Merkmale aufweist:
eine erste Zwischenwelle (90), die zwischen der Eingangswelle (60d) und der Ausgangswelle (36) in einem Übertragungsweg der Drehung von der Eingangswelle (60d) zu der Ausgangswelle (36) vorgesehen ist;
ein erstes Drehbauglied (180), das koaxial mit der ersten Zwischenwelle (90) vorgesehen ist für integrierte Drehung mit der ersten Zwischenwelle (90) basierend auf einer von der Eingangswelle (60d) übertragenen Drehung;
ein zweites Drehbauglied (182), das koaxial mit der ersten Zwischenwelle (90) vorgesehen ist;
ein Pufferbauglied (184, 184a), das das erste Drehbauglied (180) mit dem zweiten Drehbauglied (182) verbindet und angepasst ist, um einen Stoß zu reduzieren, der zwischen dem ersten Drehbauglied (180) und dem zweiten Drehbauglied (182) übertragen wird; und **dadurch gekennzeichnet, dass** dasselbe ferner folgendes Merkmal aufweist:
einen Übertragungsmechanismus (T) für die Übertragung der Drehung des zweiten Drehbauglieds (182) zu der Ausgangswelle (36);
wobei sich das zweite Drehbauglied (182) um die erste Zwischenwelle (90) dreht, basierend auf einer von dem ersten Drehbauglied (180) über das Pufferbauglied (184, 184a) übertragen Drehung.

2. Die Übertragungsvorrichtung (44) gemäß Anspruch 1, bei der das Pufferbauglied ein elastisches Bauglied (184, 184a) umfasst.

3. Die Übertragungsvorrichtung (44) gemäß Anspruch 2, bei der das elastische Bauglied (184, 184a) Gummi enthält.

4. Die Übertragungsvorrichtung (44) gemäß Anspruch 2 oder 3, bei der
das erste Drehbauglied (180) einen scheibenartigen ersten Hauptkörperabschnitt (186) umfasst, und einen ersten Eingriffnahmeabschnitt (188) und einen zweiten Eingriffnahmeabschnitt (188), die in einem Abstand in einer Umfangsrichtung des ersten Hauptkörperabschnitts (186) vorgesehen sind und sich von dem ersten Hauptkörperabschnitt (186) zu dem zweiten Drehbauglied (182) erstrecken;
das elastische Bauglied (184, 184a) einen ersten Endabschnitt (214, 214a) auf einer Seite aufweist, die dem ersten Drehbauglied (180) zugewandt ist;
der erste Eingriffnahmeabschnitt (188) und der zweite Eingriffnahmeabschnitt (188) einen ersten Raum (198) zwischen sich bereitstellen;
der erste Endabschnitt (214, 214a) des elastischen Bauglieds (184, 184a) in dem ersten Raum (198) ist; und
der erste Endabschnitt (214, 214a) durch den ersten Eingriffnahmeabschnitt (188) und/oder den zweiten Eingriffnahmeabschnitt (188) in Eingriff genommen werden kann für die Übertragung einer Drehung des ersten Drehbauglieds (180) zu dem elastischen Bauglied (184, 184a).

5. Die Übertragungsvorrichtung (44) gemäß Anspruch 4, bei der das elastische Bauglied (184) so hergestellt ist, dass der erste Endabschnitt (214) des elastischen Bauglieds (184) einen Zwischenraum aufweist zu zumindest entweder dem ersten Eingriffnahmeabschnitt (188) oder dem zweiten Eingriffnahmeabschnitt (188) und bezüglich des ersten Hauptkörperabschnitts (186) gleitbar ist.

6. Die Übertragungsvorrichtung (44) gemäß Anspruch 4, bei der das elastische Bauglied (184a) so hergestellt ist, dass der erste Endabschnitt (214a) des elastischen Bauglieds (184a) mit dem ersten Eingriffnahmeabschnitt (188) und dem zweiten Eingriffnahmeabschnitt (188) Kontakt herstellt.

7. Die Übertragungsvorrichtung (44) gemäß Anspruch 4, bei der
das zweite Drehbauglied (182) einen scheibenartigen zweiten Hauptkörperabschnitt (200) umfasst, und einen dritten Eingriffnahmeabschnitt (202) und einen vierten Eingriffnahmeabschnitt (202), die in einem Abstand in einer Umfangsrichtung des zweiten Hauptkörperabschnitts (200) vorgesehen sind und sich von dem zweiten Hauptkörperabschnitt (200) zu dem ersten Drehbauglied (180) erstrecken;
das elastische Bauglied (184, 184a) einen zweiten Endabschnitt (214, 214a) auf einer Seite aufweist, die dem zweiten Drehbauglied (182) zugewandt ist;
der dritte Eingriffnahmeabschnitt (202) und der vierte Eingriffnahmeabschnitt (202) einen zweiten Raum (212) zwischen sich bereitstellen;
der zweite Endabschnitt (214, 214a) des elastischen Bauglieds (184, 184a) in dem zweiten Raum (212) ist; und
der zweite Endabschnitt (214, 214a) durch den dritten Eingriffnahmeabschnitt (202) und/oder den vierten Eingriffnahmeabschnitt (202) in Eingriff genommen werden kann für die Übertragung einer Drehung des elastischen Bauglieds (184, 184a) zu dem zweiten Drehbauglied (182).

8. Die Übertragungsvorrichtung (44) gemäß Anspruch 7, bei der das elastische Bauglied (184) so hergestellt ist, dass der zweite Endabschnitt (214) des elastischen Bauglieds (184) einen Zwischenraum aufweist zu zumindest entweder dem dritten Eingriffnahmeabschnitt (202) oder dem vierten Eingriffnahmeabschnitt (202) und bezüglich des zweiten Hauptkörperabschnitts (200) gleitbar ist.

9. Die Übertragungsvorrichtung (44) gemäß Anspruch 7, bei der das elastische Bauglied (184a) so hergestellt ist, dass der zweite Endabschnitt (214a) des elastischen Bauglieds (184a) mit dem dritten Eingriffnahmeabschnitt (202) und dem vierten Eingriffnahmeabschnitt (202) Kontakt herstellt.

10. Die Übertragungsvorrichtung (44) gemäß einem der Ansprüche 1 bis 9, die ferner ein Drückbauglied (228) aufweist zum Drücken zumindest entweder des ersten Drehbauglieds (180) oder des zweiten Drehbauglieds (182) in einer Richtung, um das erste Drehbauglied (180) und das zweite Drehbauglied (182) dicht zueinander zu bringen.

11. Die Übertragungsvorrichtung (44) gemäß Anspruch 10, bei der das Drückbauglied (228) eine Tellerfeder umfasst, die koaxial mit der ersten Zwischenwelle (90) vorgesehen ist.

12. Die Übertragungsvorrichtung (44) gemäß einem der Ansprüche 1 bis 11, die ferner folgende Merkmale aufweist:
einen ersten Kupplungsabschnitt (C1) und einen zweiten Kupplungsabschnitt (C2), die in der Eingangswelle (60d) vorgesehen sind;
einen ersten Übertragungsabschnitt (t1) für die Übertragung einer Drehung, die von der Eingangswelle (60d) zu dem ersten Kupplungsabschnitt (C1) zugeführt wurde, zu der ersten Zwischenwelle (90), wenn der erste Kupplungsabschnitt (C1) in Eingriff ist und der zweite Kupplungsabschnitt (C2) nicht in Eingriff ist; und
einen zweiten Übertragungsabschnitt (t2) für die Übertragung einer Drehung, die von der Eingangswelle (60d) zu dem zweiten Kupplungsabschnitt (C2) zugeführt wurde, zu dem ersten Drehbauglied (180), wenn der zweite Kupplungsabschnitt (C2) in Eingriff ist;
wobei sich das zweite Drehbauglied (182) dreht basierend auf einer Drehung, die über die Eingangswelle (60d), den ersten Kupplungsabschnitt (C1), den ersten Übertragungsabschnitt (t1), die erste Zwischenwelle (90), das erste Drehbauglied (180) und das Pufferbauglied (184, 184a) übertragen wird, wenn der erste Kupplungsabschnitt (C1) in Eingriff ist und der zweite Kupplungsabschnitt (C2) nicht; und
wobei sich das zweite Drehbauglied (182) dreht basierend auf einer Drehung, die über die Eingangswelle (60d), den zweiten Kupplungsabschnitt (C2), den zweiten Übertragungsabschnitt (t2), das erste Drehbauglied (180) und das Pufferbauglied (184, 184a) übertragen wird, wenn der zweite Kupplungsabschnitt (C2) in Eingriff ist.

13. Die Übertragungsvorrichtung (44) gemäß einem der Ansprüche 1 bis 12, bei der der Übertragungsmechanismus (T) eine zweite Zwischenwelle (102) umfasst, die sich basierend auf einer Drehung von dem zweiten Drehbauglied (182) dreht; und
einen dritten Kupplungsabschnitt (C3), der in der zweiten Zwischenwelle (102) vorgesehen ist.

14. Die Übertragungsvorrichtung (44) gemäß einem der Ansprüche 1 bis 13, bei der der Übertragungsmechanismus (T) eine Kette umfasst für die Übertragung einer Drehung zwischen dem zweiten Drehbauglied (182) und der Ausgangswelle (36).

15. Ein Sattel-Typ-Fahrzeug (10), das die Übertragungsvorrichtung (44) gemäß einem der Ansprüche 1 bis 14 aufweist.

## Revendications

1. Appareil de transmission (44) présentant un arbre d'entrée (60d) et un arbre de sortie (36) pour la transmission de la rotation de l'arbre d'entrée (60d) à l'arbre de sortie (36), comprenant:
un premier arbre intermédiaire (90) disposé entre l'arbre d'entrée (60d) et l'arbre de sortie (36) sur un trajet de transmission de la rotation de l'arbre d'entrée (60d) à l'arbre de sortie (36);
un premier élément rotatif (180) prévu de manière coaxiale avec le premier arbre intermédiaire (90) en vue d'une rotation solidaire avec le premier arbre intermédiaire (90) sur base de la rotation transmise depuis l'arbre d'entrée (60d);
un deuxième élément rotatif (182) prévu de manière coaxiale avec le premier arbre intermédiaire (90);
un élément tampon (184, 184a) qui connecte le premier élément rotatif (180) au deuxième élément rotatif (182) et est adapté pour réduire l'impact transmis entre le premier élément rotatif (180) et le deuxième élément rotatif (182);
et **caractérisé par le fait qu'**il comprend par ailleurs
un mécanisme de transmission (T) pour la transmission de la rotation du deuxième élément rotatif (182) à l'arbre de sortie (36);
dans lequel le deuxième élément rotatif (182) tourne autour du premier arbre intermédiaire (90) sur base de la rotation transmise depuis le premier élément rotatif (180) par l'intermédiaire de l'élément tampon (184, 184a).

2. Appareil de transmission (44) selon la revendication 1, dans lequel l'élément tampon comprend un élément élastique (184, 184a).

3. Appareil de transmission (44) selon la revendication 2, dans lequel l'élément élastique (184, 184a) contient du caoutchouc.

4. Appareil de transmission (44) selon la revendication 2 ou 3, dans lequel
le premier élément rotatif (180) comprend première partie de corps principal en forme de disque (186), et une première partie de venue en prise (188) et une deuxième partie de venue en prise (188) prévue à un intervalle dans une direction circonférentielle de la première partie de corps principal (186) et s'étendant de la première partie de corps principal (186) vers le deuxième élément rotatif (182);
l'élément élastique (184, 184a) présente une première partie d'extrémité (214, 214a) d'un côté faisant face au premier élément rotatif (180);
la première partie de venue en prise (188) et la deuxième partie de venue en prise (188) forment un premier espace (198) entre elles;
la première partie d'extrémité (214, 214a) de l'élément élastique (184, 184a) se trouve dans le premier espace (198), et
la première partie d'extrémité (214, 214a) peut venir en prise avec la première partie d'engagement (188) et / ou la deuxième portion de venue en prise (188) pour la transmission de la rotation du premier élément rotatif (180) à l'élément élastique (184, 184a).

5. Appareil de transmission (44) selon la revendication 4, dans lequel l'élément élastique (184) est réalisé de sorte que la première partie d'extrémité (214) de l'élément élastique (184) soit distante d'au moins l'une parmi la première partie de venue en prise (188) et la deuxième partie de venue en prise (188) et puisse coulisser par rapport à la première partie de corps principal (186).

6. Appareil de transmission (44) selon la revendication 4, dans lequel l'élément élastique (184a) est réalisé de sorte que la première partie d'extrémité (214a) de l'élément élastique (184a) entre en contact avec la première partie de venue en prise (188) et la deuxième partie de venue en prise (188).

7. Appareil de transmission (44) selon la revendication 4, dans lequel
le deuxième élément rotatif (182) comprend une deuxième partie de corps principal en forme de disque (200), et une troisième partie de venue en prise (202) et une quatrième partie de venue en prise (202) prévues à un intervalle dans une direction circonférentielle de la deuxième partie de corps principal (200) et s'étendant de la deuxième partie de corps principal (200) vers le premier élément rotatif (180);
l'élément élastique (184, 184a) présente une deuxième partie d'extrémité (214, 214a) d'un côté faisant face au deuxième élément rotatif (182);
la troisième partie de venue en prise (202) et la quatrième partie de venue en prise (202) forment un deuxième espace (212) entre elles;
la deuxième partie d'extrémité (214, 214a) de l'élément élastique (184, 184a) se trouve dans le deuxième espace (212), et
la deuxième partie d'extrémité (214, 214a) peut venir en prise avec la troisième partie de venue en prise (202) et/ou la quatrième partie de venue en prise (202) pour la transmission de la rotation de l'élément élastique (184, 184a) au deuxième élément rotatif (182).

8. Appareil de transmission (44) selon la revendication 7, dans lequel l'élément élastique (184) est réalisé de sorte que la deuxième partie d'extrémité (214) de l'élément élastique (184) soit distante d'au moins l'une parmi la troisième partie de venue en prise (202) et la quatrième partie de venue en prise (202) et puisse coulisser par rapport à la deuxième partie de corps principal (200).

9. Appareil de transmission (44) selon la revendication 7, dans lequel l'élément élastique (184a) est réalisé de sorte que la deuxième partie d'extrémité (214a) de l'élément élastique (184a) entre en contact avec la troisième partie de venue en prise (202) et la quatrième partie de venue en prise (202).

10. Appareil de transmission (44) selon l'une des revendications 1 à 9, comprenant par ailleurs un élément de poussée (228) destiné à pousser au moins l'un parmi le premier élément rotatif (180) et le deuxième élément rotatif (182) dans une direction pour rapprocher le premier élément rotatif (180) et le deuxième élément rotatif (182) l'un de l'autre.

11. Appareil de transmission (44) selon la revendication 10, dans lequel l'élément de poussée (228) comprend un ressort à disque prévu coaxial avec le premier arbre intermédiaire (90).

12. Appareil de transmission (44) selon l'une des revendications 1 à 11, comprenant par ailleurs:
une première partie d'embrayage (C1) et une deuxième partie d'embrayage (C2) prévues dans l'arbre d'entrée (60d);
une première partie de transmission (t1) pour la transmission de la rotation qui a été fournie par l'arbre d'entrée (60d) à la première partie d'embrayage (C1), au premier arbre intermédiaire (90) lorsque la première partie d'embrayage (C1) est en prise et la deuxième partie d'embrayage (C2) n'est pas en prise ; et
une deuxième partie de transmission (t2) pour la transmission de la rotation qui a été fournie par l'arbre d'entrée (60d) à la deuxième partie d'embrayage (C2), au premier élément rotatif (180) lorsque la deuxième partie d'embrayage (C2) est en prise;
dans lequel le deuxième élément rotatif (182) tourne sur base de la rotation transmise par l'intermédiaire de l'arbre d'entrée (60d), de la première partie d'embrayage (C1), de la première partie de transmission (t1), du premier arbre intermédiaire (90), du premier élément rotatif (180) et de l'élément tampon (184, 184a) lorsque la première partie d'embrayage (C1) est en prise et la deuxième partie d'embrayage (C2) ne l'est pas; et
dans lequel le deuxième élément rotatif (182) tourne sur base de la rotation transmise par l'intermédiaire de l'arbre d'entrée (60d), de la deuxième partie d'embrayage (C2), de la deuxième partie de transmission (t2), du premier élément rotatif (180) et de l'élément tampon (184, 184a) lorsque la deuxième partie d'embrayage (C2) est en prise.

13. Appareil de transmission (44) selon l'une des revendications 1 à 12, dans lequel le mécanisme de transmission (T) comporte un deuxième arbre intermédiaire (102) qui tourne sur base de la rotation du deuxième élément rotatif (182); et
une troisième partie d'embrayage (C3) prévue dans le deuxième arbre intermédiaire (102).

14. Appareil de transmission (44) selon l'une des revendications 1 à 13, dans lequel le mécanisme de transmission (T) comporte une chaîne pour la transmission de la rotation entre le deuxième élément de rotation (182) et l'arbre de sortie (36).

15. Véhicule du type à selle (10) comprenant l'appareil de transmission (44) selon l'une des revendications 1 à 14.
